# EUROPEAN PATENT SPECIFICATION

(11) **EP 2 630 387 B1**
(45) Date of publication and mention of the grant of the patent: **13.08.2014**
(21) Application number: 11774176.9
(22) Date of filing: 18.10.2011
(51) Int. Cl.: F16F 9/05, F16F 9/36, F16F 9/34, F16F 9/04, F16F 13/00, B60G 15/08, B60G 11/62

(54) **GAS SPRING AND GAS DAMPER ASSEMBLY AND METHOD**
GASFEDER SOWIE RAUCHGASKLAPPENANORDNUNG UND VERFAHREN
ENSEMBLE RESSORT À GAZ ET AMORTISSEUR À GAZ ET PROCÉDÉ D'ASSEMBLAGE ASSOCIÉ

(30) Priority: 18.10.2010 US 394322 P; 07.09.2011 US 201161531808 P; 07.09.2011 US 201161531847 P
(43) Date of publication of application: 28.08.2013
(73) Proprietor: Firestone Industrial Products Company, LLC, Indianapolis, IN 46260 (US)
(72) Inventor: LEONARD, Joshua, R., Noblesville, IN 46060 (US)
(74) Representative: Banzer, Hans-Jörg
(86) International application number: PCT/US2011/056762
(87) International publication number: WO 2012/054520

(56) References cited:
- EP-A1- 0 000 287
- EP-A1- 0 444 278
- WO-A1-79/00948
- WO-A1-02/098686
- WO-A1-2009/124742
- WO-A2-2010/006167

## Description

### BACKGROUND

The present disclosure broadly relates to the art of spring devices and, more particularly, to a gas spring and gas damper assembly as well as a vehicle suspension system that includes such a gas spring and gas damper assembly and a method of operating such a gas spring and gas damper assembly.

A suspension system, such as may be used in connection with motorized vehicles, for example, can include one or more spring elements for accommodating forces and loads associated with the operation and use of the corresponding device (e.g., a motorized vehicle) to which the suspension system is operatively connected. In such applications, it is often considered desirable to utilize spring elements that operate at a lower spring rate, as a reduced spring rate can favorably influence certain performance characteristics, such as vehicle ride quality and comfort, for example. That is, it is well understood in the art that the use of a spring element having a higher spring rate (i.e. a stiffer spring) will transmit a greater magnitude of inputs (e.g., road inputs) to the sprung mass and that, in some applications, this could undesirably affect the sprung mass, such as, for example, by resulting in a rougher, less-comfortable ride of a vehicle. Whereas, the use of spring elements having lower spring rates (i.e., a softer or more-compliant spring) will transmit a lesser amount of the inputs to the sprung mass.

Such suspension systems also commonly include one or more dampers or damping components that are operative to dissipate energy associated with undesired inputs and movements of the sprung mass, such as road inputs occurring under dynamic operation of a vehicle, for example. Typically, such dampers are liquid filled and operatively connected between a sprung and unsprung mass, such as between a body and axle of a vehicle, for example. One example of such damping components are conventional shock absorbers that are commonly used in vehicle suspension systems.

In other arrangements, however, the dampers or damping components can be of a type and kind that utilizes gas rather than liquid as the working medium. In such known constructions, the gas damper portion permits gas flow between two or more volumes of pressurized gas, such as through one or more orifices, as shown, for example, in U.S. Patent Application Publication No. 2004/0124571, or through one or more valve ports, as shown, for example, in U.S. Patent Application Publication No. 2003/0173723. Generally, there is some resistance to the movement of pressurized gas through these passages or ports, and this resistance acts to dissipate energy associated with the gas spring portion and thereby provide some measure of damping.

A gas spring and gas damper assembly according to the preamble of independent claim 1 is known from WO 2009/124742 A1. In addition, WO 79/00948 A1 proposes the use of elastomeric members as biasing elements for urging a piston towards a certain position of its travel which varies according to the loading of the corresponding assembly.

One factor that may be limiting the broader adoption and use of gas spring and gas damper assemblies relates to the significant travel of which gas spring devices are capable. That is, gas spring devices are capable of being displaced between a minimum or compressed height and a maximum or extended height and the difference in these overall heights can be substantial.

Certain difficulties relating to the incorporation of gas dampers into gas spring devices have been associated with the aforementioned differences in overall height of gas spring devices. At one extreme, the minimum or compressed height of a gas spring device will act to limit the overall length of components that can be housed within the gas spring device. At the other extreme, any components housed within the gas spring device should remain operatively connected between the opposing end members of the gas spring device in the extended condition thereof.

Accordingly, it is desired to develop a gas spring and gas damper assembly as well as a suspension system and method of assembly that overcome the foregoing and other difficulties associated with known constructions.

### BRIEF DESCRIPTION

According to the present invention, a gas spring and gas damper assembly as defined in independent claim 1 and a method of assembling a gas spring and gas damper assembly as defined in independent claim 12 are provided. The dependent claims define preferred or advantageous embodiments of the invention.

One example of a gas spring and gas damper assembly in accordance with the subject matter of the present disclosure can include a gas spring assembly and a gas damper assembly. The gas spring assembly can having a longitudinal axis, and can include a first end member and a second end member that is disposed in longitudinally-spaced relation to the first end member. A flexible wall can be secured between the first and second end members and can extend circumferentially about the longitudinal axis to at least partially define a spring chamber between the first and second end members. The gas damper assembly can be disposed within the spring chamber of the gas spring assembly and can be operatively connected between the first and second end members. The gas damper assembly can include a first damper element that is operatively connected to the first end member. The first damper element can include a first wall that at least partially defines a first damping chamber. A second damper element can include a first end received within the first damping chamber and an opposing second end that projects outwardly from the first damping chamber. The second damper element can include a second wall that at least partially defines a second damping chamber with the second damping chamber being accessible from outside the first damping chamber. The second damper element can be reciprocally displaceable in an approximately longitudinal direction with respect to the first damper element. A third damper element can include a first end that is operatively connected to the second end member and an opposing second end that is received within the second damping chamber of the second damper element. The second end can be capable of reciprocal movement with respect to the second side wall of the second damper element.

Another example of a gas spring and gas damper assembly in accordance with the subject matter of the present disclosure can include a gas spring and a gas damper. The gas spring can have a longitudinal axis and can include a first end member, a second end member that is spaced longitudinally from the first end member, and a flexible wall that extends circumferentially about the longitudinal axis and is operatively connected between the first and second end members such that a spring chamber is at least partially defined therebetween. The gas damper can be disposed within the spring chamber and can be operatively connected between the first and second end members. The gas damper can include a first damper element that is operatively connected to the first end member and can include a first side wall that at least partially defines a first damping chamber. A second damper element can extend longitudinally between a first end and a second end that is opposite the first end. The second damper element can include an end wall and a second side wall that at least partially defines a second damping chamber. The end wall can be disposed transverse to the second side wall and can at least partially form a second element piston. The second damper element can be oriented such that the second element piston and at least a portion of the second side wall are disposed within the first damping chamber. The second damper element can be slidably supported within the first damping chamber such that the end wall is displaceable relative to the first side wall of the first damper element. A third damper element can be operatively connected to the second end member and can include a damper rod and a third element piston disposed along the damper rod in spaced relation to the second end member. The third damper element can be oriented such that the third element piston and at least a portion of the damper rod are disposed within the second damping chamber. The third damper element can be displaceable relative to the second side wall of the second damper element. A first biasing element can be disposed within the second damping chamber between the first end of the second damper element and the third element piston. The first biasing element can be operative to urge the first end of the second damper element in a direction away from the third element piston. A second biasing element can be disposed within the second damping chamber between the second end of the second damper element and the third element piston. The second biasing element can be operative to urge the second end of the second damper element in a direction away from the third element piston.

A further example of a gas spring and gas damper assembly in accordance with the subject matter of the present disclosure can include a first damper element that includes a housing wall and an end wall. The housing wall can include an open end and can at least partially define a first damping chamber. The end wall can extend across the open end of the housing wall. A second damper element can include a side wall and a piston wall extending transverse to the side wall. The side wall can at least partially define a second damping chamber. The piston wall can be dimensioned for receipt within the first damping chamber. A third damper element can include a damper rod and a damper piston. The damper piston can extend transverse to an elongated length of the damper rod and can be dimensioned for receipt within the second damping chamber. A piston stop can be operatively disposed between the first and third damper elements. The piston stop can abuttingly interconnect the end wall of the first damper element with the third damper element during a compressed height condition of the assembly. In some cases, the piston stop can include a protrusion projecting from at least one of the end wall of the first damper element and the damper piston of the third damper element. The protrusion can include an end wall extending transverse to the elongated length of the damper rod. The piston wall of the second damper element can include a passage formed therethrough. The protrusion can include a side wall dimensioned for receipt within the passage of the piston wall.

Yet another example of a gas spring and gas damper assembly in accordance with the subject matter of the present disclosure can include a damper cylinder that at least partially defines a damping chamber. A damper element can include a damper element body formed from a unitary mass of material. The damper element body can include a damper rod portion, a damper piston portion dimensioned for receipt within the associated damper cylinder and a transition portion that operatively interconnects the damper rod portion and the damper piston portion. In some cases, the transition portion can have a curvilinear cross-sectional shape.

One example of a damper element in accordance with the subject matter of the present disclosure, such as may be used in an associated gas spring and gas damper assembly that includes an associated damper cylinder, can include a damper element body formed from a unitary mass of material. The damper element body can include a damper rod portion, a damper piston portion that is dimensioned for receipt within the associated damper cylinder, and a transition portion that operatively interconnects the damper rod portion and the damper piston portion. In some cases, the unitary mass of material could be a metal material selected from a group consisting of steel, stainless steel and aluminum.

One example of a method of assembling a gas spring and gas damper assembly in accordance with the subject matter of the present disclosure can include providing a first damper element that includes a first side wall that at least partially defines a first damping chamber. The method can also include providing a second damper element extending longitudinally between a first end and a second end opposite the first end. The second damper element can include an end wall and a second side wall that at least partially defines a second damping chamber. The end wall can be disposed transverse to the second side wall and can at least partially forming a second element piston. The method can further include positioning the second element piston and at least a portion of the second side wall within the first damping chamber such that the second damper element can be slidably supported within the first damping chamber and the second element piston can be displaceable relative to the first side wall of the first damper element. The method can also include providing a third damper element that can include a damper rod and a third element piston disposed along the damper rod. The method can also include positioning the third damper element such that the third element piston and at least a portion of the damper rod are disposed within the second damping chamber. The method can further include providing first and second biasing element. The method can also include positioning the first biasing element within the second damping chamber between the first end of the second damper element and the third element piston such that the first biasing element can be operative to urge the first end of the second damper element in a direction away from the third element piston. The method can further include positioning the second biasing element within the second damping chamber between the second end of the second damper element and the third element piston such that the second biasing element is operative to urge the second end of the second damper element in a direction away from the third element piston.

A method according to the foregoing paragraph can also include securing a gas damper assembly within a spring chamber of a gas spring assembly. The method can include providing a first end member and securing one of the first and third damper elements to the first end member. The method can also include providing a second end member and securing the other of the first and third damper elements to the second end member. The method can further include providing a flexible wall and securing the flexible wall between the first and second end members such that a spring chamber is at least partially formed by the flexible wall between the first and second end member with the spring chamber containing at least the first, second and third damper elements.

### BRIEF DESCRIPTION OF THE DRAWINGS

FIG. 1 is a schematic representation of one example of a vehicle including a suspension system utilizing gas spring and gas damper assemblies in accordance with the subject matter of the present disclosure.
FIG. 2 is a top plan view of one example of a gas spring and gas damper assembly in accordance with the subject matter of the present disclosure.
FIG. 3 is a cross-sectional side view of the gas spring and gas damper assembly shown in FIG. 2 taken from along line 3-3 thereof.
FIG. 4 is an enlarged, cross-sectional view of the portion of the gas spring and gas damper assembly in FIGS. 2 and 3 identified as Detail 4 in FIG. 3.
FIG. 5 is a cross-sectional side view of the gas spring and gas damper assembly in FIGS. 2-4 shown in a compressed condition.
FIG. 6 is a cross-sectional side view of the gas spring and gas damper assembly in FIGS. 2-5 shown in an extended condition.
FIG. 7 is a cross-sectional side view of the gas spring and gas damper assembly in FIGS. 2-6 shown undergoing an angular deflection.
FIG. 8 is an enlarged, cross-sectional side view of the portion of the gas spring and gas damper assembly in FIGS. 2-7 identified as Detail 8 in FIG. 7 and shown undergoing an angular deflection.
FIG. 9 is a cross-sectional side view of another example of a gas spring and gas damper assembly in accordance with the subject matter of the present disclosure.
FIG. 10 is an enlarged, cross-sectional view of the portion of the gas spring and gas damper assembly identified as Detail 10 in FIG. 9.
FIG. 11 is a greatly enlarged view of the portion of the gas spring and gas damper assembly in FIGS. 9 and 10 identified as Detail 11 in FIG. 10.
FIG. 12 is a bottom plan view, in cross-section, of a portion of the gas spring and gas damper assembly shown in FIGS. 9-11 taken from along line 12-12 in FIG. 10.
FIG. 13 is a cross-sectional side view of the cylinder end assembly shown in FIGS. 9-12 taken from along line 13-13 in FIG. 12.
FIG. 14 is a cross-sectional side view of the cylinder end assembly shown in FIGS. 9-13 taken from along line 14-14 in FIG. 12.
FIG. 15 is a graphical representation of one example of a method of assembling a gas spring and gas damper assembly in accordance with the subject matter of the present disclosure.
FIG. 16 is a graphical representation of one example of a method of assembling a gas damper assembly in accordance with the subject matter of the present disclosure.

### DETAILED DESCRIPTION

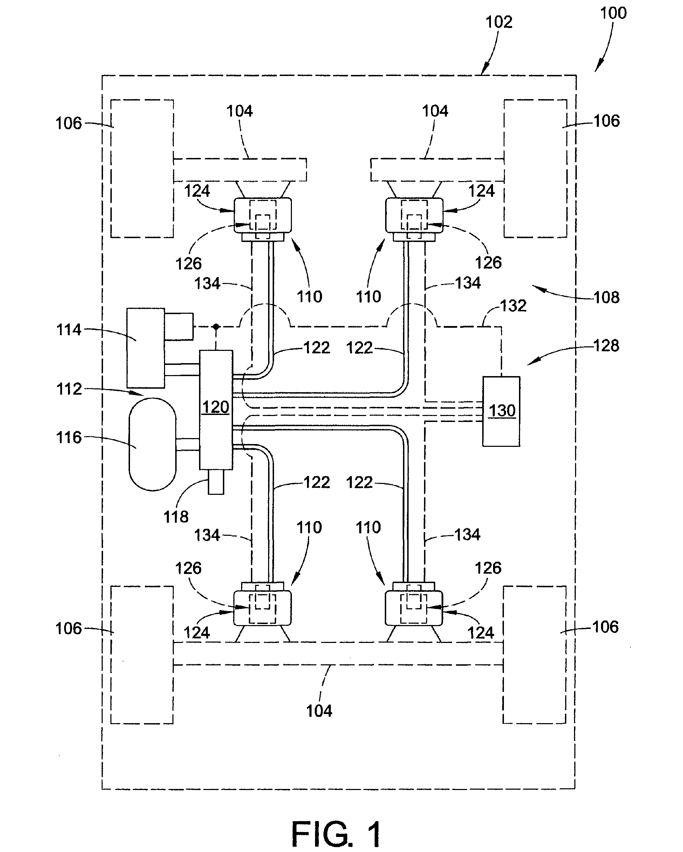

Turning now to the drawings wherein the showings are for the purpose of illustrating exemplary embodiments of the present novel concept and not for limiting the same, FIG. 1 illustrates a vehicle **100** having a sprung mass, such as a vehicle body **102**, for example, and an unsprung mass, such as axles **104** and/or wheels **106**, for example. Additionally, vehicle **100** can include a suspension system **108** that is operatively connected between the sprung and unsprung masses. The suspension system can include a plurality of gas spring and gas damper assemblies **110** that are operatively connected between the sprung and unsprung masses of the vehicle. Assemblies **110** can be disposed between the sprung and unsprung masses in any suitable manner, configuration and/or arrangement. For example, assemblies **110** are shown in FIG. 1 as being disposed adjacent wheels **106**. Depending on desired performance characteristics and/or other factors, the suspension system may, in some cases, also include damping members (not shown) of a typical construction that are provided separately from assemblies **110** and secured between the sprung and unsprung masses in a conventional manner. In a preferred arrangement, however, gas spring and gas damper assemblies **110** will be sized, configured and operative to provide the desired performance characteristics for the suspension system without the use of additional damping members (e.g., conventional struts or shock absorbers) that are separately provided.

Vehicle **100** also includes a pressurized gas system **112** that is in communication with assemblies **110** and that is operative to selectively supply pressurized gas thereto and exhaust pressurized gas therefrom. Pressurized gas system **112** can include a pressurized gas source, such as a compressor **114**, and can optionally include a storage vessel, such as a reservoir **116**, for example, for receiving and storing pressurized gas, such as may be generated by the pressurized gas source. System **112** can further include a suitable exhaust, such as a muffler **118**, for example, for venting pressurized gas from the system.

Pressurized gas system **112** can be in communication with the gas spring and gas damper assemblies in any suitable manner. For example, system **112** can include a valve assembly **120** or other suitable device or arrangement for selectively distributing pressurized gas to, from and/or between the pressurized gas source or sources, the exhaust and/or the gas spring and gas damper assemblies. As shown in the exemplary embodiment in FIG. 1, compressor **114**, reservoir **116** and muffler **118** are in fluid communication with valve assembly **120** and can be selectively placed in fluid communication with one another by way of the valve assembly. Additionally, assemblies **110** are in fluid communication with valve assembly **120** by way of gas transmission lines **122** and, thus, can be selectively placed in communication with the compressor, reservoir, muffler and/or one another by way of the valve assembly.

It will be appreciated that gas spring and gas damper assemblies **110** can take any suitable form, configuration and/or construction in accordance with the present novel concept. In the embodiment shown in FIG. 1, each assembly **110** includes a gas spring assembly **124** and a gas damper assembly, which is schematically represented in FIG. 1 by item number **126**, that is substantially-entirely contained within gas spring assembly **124**. Gas spring assemblies **124** include a spring chamber (not numbered) that is operative to receive and retain a quantity of pressurized gas. Gas damper assemblies **126** can include a plurality of components that are telescopically interconnected with one another and at least partially define a plurality of damping chambers. In some cases, one of the gas dampers can be at least partially received within the spring chamber of a gas spring assembly with one or more of the damping chambers being in fluid communication with the spring chamber of the gas spring assembly.

In operation of the exemplary embodiment shown in FIG. 1, valve assembly **120** can be selectively actuated to transfer pressurized gas from the compressor and/or reservoir to one or more of gas spring and gas damper assemblies **110** via one or more of gas transmission lines **122**. Additionally, valve assembly **120** can be selectively actuated to exhaust pressurized gas from one or more of the gas spring and gas damper assemblies through the gas transmission lines, such as by way of muffler **118** or another suitable arrangement. It will be appreciated that the foregoing pressurized gas system and operation thereof are merely exemplary and that other suitable pressurized gas sources, systems and/or methods of operation could alternately be used without departing from the subject matter of the present disclosure.

Vehicle **100** also includes a suspension control system **128** for selectively operating, adjusting or otherwise influencing or controlling the performance or one or more suspension system components, such as gas spring and gas damper assemblies **110** and/or pressurized gas system **112**, for example. Suspension control system **128** can include an electronic control unit **130** in communication with one or more components of valve assembly **120**, such as through a communication line **132**, for example, for selective actuation and/or operation thereof. Electronic control unit **130** is also shown in FIG. 1 as being in communication with suitable height sensing devices (not shown in FIG. 1) that can optionally be used in association with gas spring and gas damper assemblies **110**. It will be appreciated that such communications can be implemented in any suitable manner, such as by way of communication lines **134**, for example. Additionally, it will be appreciated that height sensors or other distance-determining devices of any suitable type, kind, construction and/or configuration can be used, such as mechanical linkage sensors, ultrasonic wave sensors or electromagnetic wave sensors, for example. Additionally, other sensors, sensing devices and/or other such components can also, optionally, be used in connection with suspension control system **128**, such as pressure sensors, accelerometers and/or temperature sensors, for example.

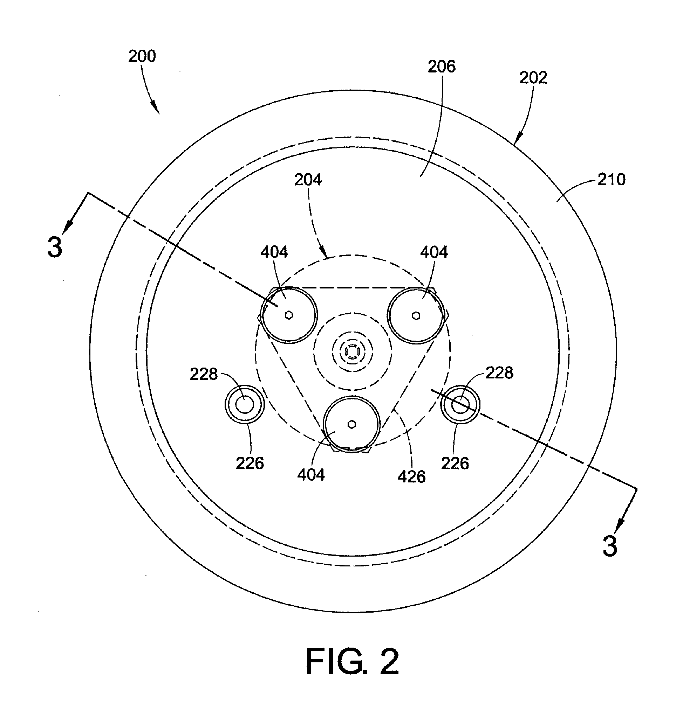

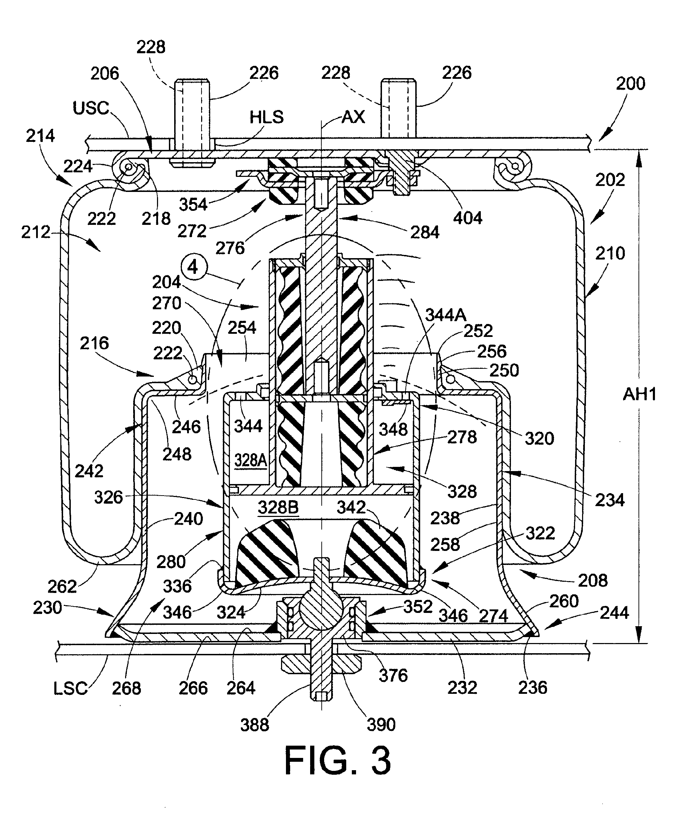

One example of a gas spring and gas damper assembly **200** in accordance with the subject matter of the present disclosure is shown in FIGS. 2-8. Gas spring and gas damper assembly **200** includes a gas spring assembly **202** and a gas damper assembly **204** that is substantially-entirely housed within the gas spring assembly. Gas spring assembly **202** can be of any type, kind, construction, configuration and/or arrangement, such as is shown in FIG. 1-7 as being of a rolling lobe-type construction, for example, and can have a longitudinal axis and can include a first end member, an opposing second end member spaced longitudinally from the first end member and a flexible wall that is operatively connected therebetween. It will be appreciated, however, that other gas spring assembly constructions could alternately be used, such as a convoluted bellow-type construction, for example. Additionally, gas spring assembly **202** can operatively connected between opposing structural components in any suitable manner, such as, for example, are generally represented in FIG. 3 by upper structural component **USC** (e.g., vehicle body **102** in FIG. 1) and lower structural component **LSC** (e.g., axle **104** in FIG. 1).

In the exemplary arrangement shown in FIGS. 2-8, gas spring assembly **202** has a longitudinally-extending axis **AX** and includes a first or upper end member, such as a bead plate **206**, for example, and an opposing second or lower end member, such as a piston **208**, for example, that is spaced longitudinally from the first end member. A flexible wall, such as a flexible sleeve **210**, for example, can be secured between the first end member (e.g., bead plate **206**) and the second end member (e.g., piston **208**) in a suitable manner such that a spring chamber **212** is at least partially formed therebetween.

Flexible sleeve **210** extends in a generally longitudinal manner between a sleeve end **214** and a sleeve end **216**. Flexible sleeve **210** includes a mounting bead **218** along sleeve end **214** and a mounting bead **220** along sleeve end **216**. Mounting beads **218** and **220** can optionally include a reinforcing element or other suitable component, such as a bead wire **222**, for example.

End **214** of flexible sleeve **210** can be secured on or along the end member in any suitable manner. For example, mounting bead **218** of the flexible sleeve can be captured by an outer peripheral edge **224** of bead plate **206**. The peripheral edge can be deformed around mounting bead **218** in any manner suitable for forming a substantially fluid-tight seal therewith. One or more securement devices, such as mounting studs **226**, for example, can be included along bead plate **206** and project through the associated structural component (e.g., upper structural component **USC**) in a manner suitable for receiving a corresponding securement device or element (not shown) to secure the first end member to the associated structural component. In the exemplary embodiment shown in FIG. 3, mounting studs **226** project axially outwardly from the bead plate and extend through holes **HLS** in upper structural component **USC**.

Additionally, a fluid communication port, such as a fluid passage **228,** for example, can optionally be provided on or along the first or upper end member to permit fluid communication with spring chamber **212.** In the exemplary embodiment shown, fluid passages **228** extend through mounting studs **226** and are in fluid communication with the spring chamber. It will be appreciated, however, that any other suitable fluid communication arrangement could alternately be used.

Mounting bead **220** of flexible sleeve **210** can be secured to the second end member in any suitable manner. As one example, the mounting bead could be retained on or along the piston using one or more retaining elements or components (e.g., crimp rings or retaining caps). As another example, mounting bead **220** could be friction fit along a wall portion of piston **208** and, optionally, at least partially retained thereon using a radially outwardly-extending projection. It will be appreciated, however, that any other suitable arrangement and/or configuration could alternately be used.

In the exemplary embodiment in FIGS. 3 and 5-7, for example, piston **208** is shown as including piston body **230** that is formed from a base member **232** and an outer shell **234,** which is operatively connected to the base member such that a substantially fluid-tight seal is formed therebetween, such as through the use of a flowed-material joint **236** extending circumferentially about axis **AX,** for example. It will be appreciated, however, that in other cases, a piston body could be used in which the base member and outer shell are integrally formed with one another, such as through the use of an injection molding process, for example. In such case, the base member could be alternately referred to as a base portion or base member portion, and the outer shell could be alternately referred to as an outer shell portion.

Outer shell (or outer shell portion) **234** includes a shell wall **238** that extends circumferentially about axis **AX.** Shell wall **238** includes an outer side wall portion **240** that extends in a generally longitudinal direction between an end **242,** which is disposed toward bead plate **206,** and an end **244,** which is disposed in longitudinally spaced relation to end **242** and toward lower structural component **LSC.** Shell wall **238** also includes an end wall portion **246** that transitions into outer side wall portion **240** at a curved or shoulder portion **248.** An inner side wall portion **250** projects from end wall portion **246** in a direction extending axially away from end **244.** Inner side wall portion **250** terminates in the axial direction at an end **252.** Additionally, inner side wall portion **250** includes an outer surface (not numbered) facing radially outward and an inner surface **254** facing radially inward. A projection **256** extends radially-outwardly from along the outer surface adjacent end **252** of inner side wall portion **250.**

It will be recognized that a wide variety of shapes, profiles and/or configurations can and have been used in forming the outer side wall of a gas spring piston. As such, it will be appreciated that outer side wall portion **240** of shell wall **238** can be of any suitable shape, profile and/or configuration and that the profile shown in FIGS. 2-7 is merely exemplary. Mounting bead **220** of flexible sleeve **210** can be received on or along the outer surface of inner side wall portion **250** such that a substantially fluid-tight seal is formed therebetween with projection **256** at least partially retaining mounting bead **220** on inner side wall portion **250.** Additionally, outer side wall portion **240** of shell wall **238** includes an inside surface **258** and an outside surface **260.** As such, a portion of flexible sleeve **210** extends along end wall portion **246** and outside surface **260** of outer side wall portion **240** such that a rolling lobe **262** is formed along piston body **230** and is displaced along the outer side wall portion as the gas spring assembly undergoes changes in overall height.

Base member **232** includes an inside surface **264** and an outside surface **266,** which can be disposed in abutting engagement with lower structural component **LSC.** Inside surface **264** of base member **232** and inside surface **258** of outer side wall portion **240** at least partially define a piston chamber **268** within piston **208.** Inner surface **254** of inner side wall portion **250** at least partially defines an opening or passage **270** into piston **208** by which piston chamber **268** is in fluid communication with spring chamber **212.** In a preferred arrangement, inner surface **254** defines an opening or passage (e.g., passage **270**) into piston chamber **268** that is of sufficient size to permit piston chamber **268** and spring chamber **212** to operate as a substantially unified fluid chamber. That is, in a preferred arrangement, passage **270** will be sufficiently large that minimal fluid flow restriction (e.g., approximate zero fluid flow restriction) will occur for pressurized gas flowing between spring chamber **212** and piston chamber **268** under typical conditions of operation.

Gas damper assembly **204** is shown in FIGS. 3-7 as being substantially entirely contained within gas spring assembly **202** and extending longitudinally between an end **272** that is operatively connected to bead plate **206** and an end **274** that is operatively connected to piston **208.** Gas damper assembly **204** includes a plurality of damper elements that are operatively interconnected with one another for telescopic extension and compression in relation to corresponding extension and compression of gas spring assembly **202.**

In the exemplary arrangement in FIGS. 3-7, gas damper assembly **204** is shown as including damper elements **276, 278** and **280** that are operatively interconnected with one another for telescopic extension and compression. Damper element **276** is operatively connected to the first end member (e.g., bead plate **206**) and extends from the first end member toward the second end member (e.g., piston **208**). Damper element **280** is operatively connected to the second end member (e.g. piston **208**) and extends from the second end member toward the first end member (e.g., bead plate **206**). Damper element **278** is disposed longitudinally between damper elements **276** and **280,** and is operatively interconnected therewith such that damper elements **276** and **278** can move relative to one another and such that damper element **278** and **280** can move relative to one another.

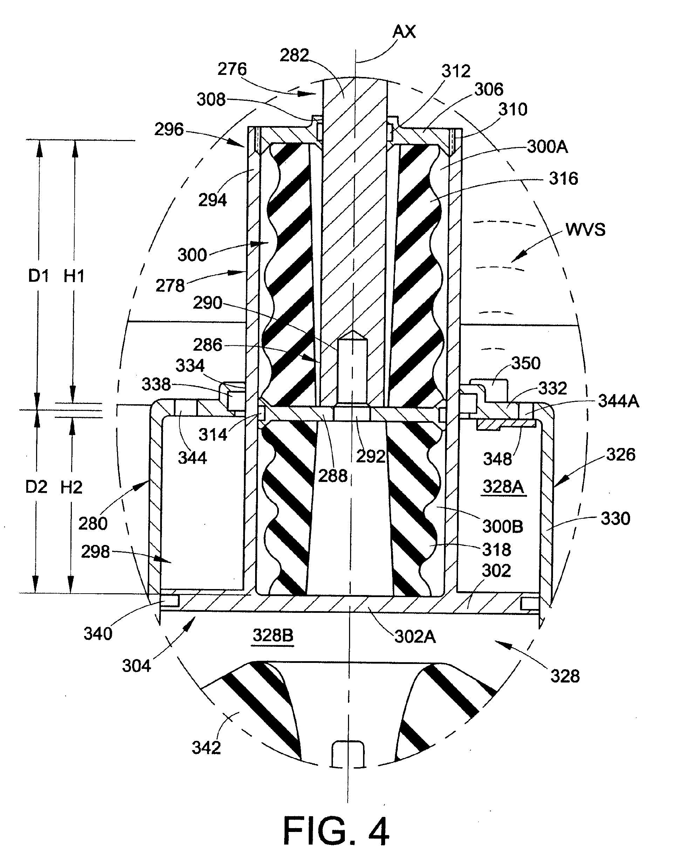

As shown in FIG. 4, damper element **276** includes a damper rod **282** that extends longitudinally from an end **284** (FIG. 3) to an end **286.** A damper piston 288 is disposed along end **286** of damper rod **282** and can be attached or otherwise connected thereto in any suitable manner. For example, damper piston **288** could be integrally formed with damper rod **282.** As another example, end **286** of damper rod **282** could include a securement feature, such as a threaded passage **290,** for example. Damper piston **288** could include a hole **292** extending therethrough such that a securement device, such as a threaded fastener (not shown), for example, could be used to secure damper piston **288** along end **286** of damper rod **282.**

Damper element **278** includes a side wall **294** extending circumferentially about axis **AX** between longitudinally-spaced ends **296** and **298** such that a longitudinally-extending damping chamber **300** is at least partially formed by side wall **294.** A piston wall **302** extends radially outwardly beyond side wall **294** such that a damper piston **304** is formed along end **298** of damper element **278.** An end wall **306** is secured across end **296** of side wall **294** and thereby further encloses and defines damping chamber **300.** End wall **306** includes a passage wall **308** that at least partially defines a rod passage (not numbered) extending through the end wall. Additionally, an outer peripheral edge of end wall **306** can include a securement feature and end **296** of side wall **294** can include a securement feature that is complimentary to the securement feature of end wall **306,** such that the end wall can be secured across the end of the side wall. In a preferred arrangement, a plurality of threads are disposed along the outer peripheral edge of end wall **306** and a corresponding plurality of thread are disposed along end **296** of side wall **294** such that a threaded connection **310** can be formed therebetween. While it will be appreciated that other securement features could alternately be used, one benefit of using a threaded connection, such as has been described above, is that the same facilitates assembly, as will be described in additional detail hereinafter.

As discussed above, damper elements **276** and **278** are operatively interengaged with one another for telescopic extension and compression. In the exemplary arrangement shown, damper piston **288** is disposed within damping chamber **300** and damper rod **282** extends out of damping chamber **300** through the rod passage (not numbered) that is at least partially defined by passage wall **308.** As such, end **284** of damper rod **282** is disposed outwardly of damping chamber **300** and can be operatively connected along bead plate **206** in a suitable manner, such as will be described in additional detail hereinafter.

Damping chamber **300** is separated by damper piston **288** into chamber portions **300A** and **300B.** In some cases, it may be desirable to maintain chamber portions **300A** and **300B** in fluidic isolation from one another, such as by including one or more sealing elements (not shown) operatively disposed between damper piston **288** and side wall **294.** Additionally, it may be desirable to include one or more sealing elements (not shown) between damper rod **282** and passage wall **308,** such that a substantially fluid-tight seal is formed therebetween and such that damping chamber **300** and spring chamber **212** are fluidically isolated from one another through the rod passage. In such case, additional fluid communication ports (not shown) can be selectively provided in one or more of damper piston **288,** end wall **306** and/or a central portion **302A** of piston wall **302.** Such additional fluid communication ports can be sized and configured to generate damping forces during relative movement between damper element **276** and damper element **278.**

It will be recognized that significant frictional forces may be generated by the sealing arrangements described above in connection with the interface between damper piston **288** and side wall **294** as well as in connection with the interface between damper rod **282** and passage wall **308.** In some cases, it may be desirable to avoid these frictional forces (or for other reasons) by forgoing the use of sealing elements along the interface between damper piston **288** and side wall **294** and/or along the interface between damper rod **282** and passage wall **308.** In such case, a friction reducing bushing or wear band can, optionally, be disposed between the damper piston and the side wall and/or between the damper rod and the passage wall. As identified in FIG. 4, friction-reducing bushings or wear bands **312** and **314** are respectively disposed between damper piston **288** and side wall **294** and between damper rod **282** and passage wall **308.**

Gas damper assembly **204** can also include at least one biasing element disposed within damping chamber **300** and can be operative to act between damper piston **288** and end wall **306** and/or central portion **302A** of piston wall **302.** In the exemplary arrangement shown in FIGS. 3-7, two biasing elements are included. Biasing element **316** is disposed within chamber portion **300A** and is operative to act on and between damper piston **288** and end wall **306.** Biasing element **318** is disposed within chamber portion **300B** and is operative to act on and between damper piston **288** and central portion **302A** of piston wall **302.** One benefit of including a biasing element, such as biasing element **316** and/or **318,** for example, within one or both of the chamber portions (e.g., chamber portions **300A** and **300B**) is that the biasing element can act as a bumper or cushion that impedes direct physical contact between damper piston **288** and a corresponding one of end wall **306** and/or central portion **302A** of piston wall **302.**

Another benefit of including a biasing element, such as biasing element **316** and/or **318**, for example, within one or both of the chamber portions (e.g., chamber portions **300A** and **300B**) is that the biasing element(s) can act to establish and/or control the longitudinal position of damper element **278** relative to other components of the gas damper assembly, as will be discussed in greater detail hereinafter. Additionally, during operation, the longitudinal forces acting between damper element **276** and damper element **278** will deflect biasing elements **316** and **318** to varying degrees and in various manners, as will be described in greater detail hereinafter. It will be appreciated that a biasing force threshold will correspond with or otherwise have a relation to the spring rate of the one or more biasing elements (e.g., biasing elements **316** and/or **318**). As such, it will be recognized that where two biasing elements are used, such as biasing elements **316** and **318,** for example, the biasing elements could have different spring rates, such as, for example, by using different materials or combinations of materials for the biasing elements and/or by using different sizes, dimensions and/or proportions for the biasing elements.

As an example, biasing element **316** is disposed within chamber portion **300A** and abuttingly engages damper piston **288** and end wall **306.** Biasing element **316** is shown as including a first height, which is represented in FIG. 4 by reference dimension **H1,** and has a first spring rate, such as, for example, may be established or otherwise at least partially defined by the material (or combination of materials) from which the biasing element is formed and/or by the size, shape and/or proportions of the biasing element. Additionally, biasing element **318** is disposed within chamber portion **300B** and abuttingly engages damper piston **288** and central portion **302A** of piston wall **302.** Biasing element **318** is shown as including a second height, which is represented in FIG. 4 by reference dimension **H2,** and has a second spring rate, such as, for example, may be established or otherwise at least partially defined by the material (or combination of materials) from which the biasing element is formed and/or by the size, shape and/or proportions of the biasing element. In some cases, the first and second spring rates may be approximately equal to one another. In other cases, however, the first and second spring rates may be different from one another such that the first spring rate is either greater or less than the second spring rate, as may be desirable for a particular application and/or use. Examples of suitable materials for use as or in forming biasing elements, such as elements **316** and/or **318,** for example, can include elastomeric polymers, such as foamed and unfoamed polyurethane, foamed and unfoamed natural rubber, and foamed and unfoamed synthetic rubber, such as in the form of open-cell or closed-cell spring elements. Other examples can include biasing elements formed from metals, such as steel coil springs, for example.

As indicated above, biasing element **316** is shown as having a height **H1** and biasing element **318** is shown as having a height **H2** that is different from height **H1.** As such, it will be recognized that end wall **306** is disposed a first distance from damper piston **288,** which first distance is represented in FIG. 4 by reference dimension **D1,** and central portion **302A** of piston wall **302** is disposed a second distance from damper piston **288,** which second distance is represented in FIG. 4 by reference dimension **D2,** with the first distance being greater than the second distance. Accordingly, central portion **302A** of piston wall **302** is shown as being longitudinally positioned nearer to damper piston **288** and end wall **306** is shown as being longitudinally positioned further from damper piston **288.** It will be appreciated, however, that the damper piston could alternately be longitudinally positioned approximately centrally between the end wall and the central portion of the piston wall, or the end wall could be nearer to the damper piston and the central portion of the piston wall could be further from the damper piston.

Damper element **280** is shown in FIGS. 3-7 as extending longitudinally between opposing ends **320** and **322** and including an end wall **324** disposed along end **322** and housing wall **326** that is secured to end wall **324** and at least partially defines a damping chamber **328** therebetween. End wall **324** is operatively connected on or along the second end member (e.g., piston **208**). As identified in FIG. 4, housing wall **326** is shown as including a side wall portion 330 extending longitudinally from along end wall **324** toward an end wall portion **332** of the housing wall. End wall portion **332** of housing wall **326** includes a passage wall **334** that at least partially defines a damper passage (not numbered) extending therethrough. End wall **324** and housing wall **326** can be operatively connected to one another in any manner suitable for forming a substantially fluid-tight seal therebetween. As one example, a threaded connection (not shown), such as may be similar to threaded connection **310**, for example, could be used in conjunction with one or more sealing elements (not shown) to form a substantially fluid-tight seal. As another example, a flowed-material joint **336** could be used.

As discussed above, damper elements **278** and **280** are operatively interengaged with one another for telescopic extension and compression. In the exemplary arrangement shown, a portion of damper element **278** is disposed within damping chamber **328** such that side wall **294** and end wall **306** of damper element **278** extend longitudinally-outwardly of damping chamber **328** through the damper passage (not numbered) that is at least partially defined by passage wall **334** within end wall portion **332**. As such, end **296** of damper element **278** is disposed outwardly of damping chamber **328** and end **298** of damper element **278** is disposed within damping chamber **328**, such that piston wall **302** extends radially-outwardly toward side wall portion **330** of housing wall **326** and separates damping chamber **328** into chamber portions **328A** and **328B.**

In some cases, it may be desirable to permit fluid communication between chamber portions **328A** and **328B,** such as by including one or more friction-reducing bushings or wear bands disposed along the interface between side wall **294** and passage wall **334** of end wall portion **332** of housing wall **326** and/or along the interface between piston wall **302** and side wall portion **330** of housing wall **326.** In a preferred embodiment, however, chamber portions **328A** and **328B** are maintained in fluidic isolation from one another, such as by including one or more sealing elements **338** (FIG. 4) operatively disposed between side wall **294** and passage wall **334** of end wall portion **332** of housing wall **326.** Additionally, such a preferred arrangement can include one or more sealing elements **340** (FIG. 4) disposed between piston wall **302** and side wall portion **330** of housing wall **326** such that a substantially fluid-tight seal is formed therebetween.

As discussed above, damper elements **278** and **280** are operatively interengaged with one another for telescopic extension and compression. As such, piston wall **302** of damper element **278** moves toward and away from end wall **324** of damper element **280** during operation and use of the gas damper assembly. A bumper or other cushioning element can optionally be disposed within either or both of chamber portions **328A** and/or **328B** such as may be useful to prevent or at least minimize the possibility of direct physical contact between piston wall **302** of damper element **278** and end wall **324** and/or end wall portion **332** of housing wall **326.** As shown in FIGS. 3-7, a bumper **342** is disposed within chamber portion **328B** and is supported along and secured to end wall **324** of damper element **280.** It will be appreciated, however, that any other suitable arrangement could alternately be used. For example, the bumper could alternately be secured on along piston wall **302** of damper element **278.**

As discussed above, sealing elements **338** and **340** are respectively disposed between side wall **294** and passage wall **334** of end wall portion **332** of housing wall **326** and between piston wall **302** and side wall portion **330** of housing wall **326,** such that a substantially fluid-tight seals are formed therebetween. As such, in some cases, it may be desirable to permit fluid transfer into, out of and/or between chamber portions **328A** and **328B** depending upon the desired performance characteristics of gas damper assembly **204.**

For example, the arrangement shown in FIGS. 3-7 includes a substantially fluid-tight seal formed between chamber portions **328A** and **328B** across piston wall 302. In some cases, piston wall **302** may include a passage or port (not shown) extending through the piston wall that would permit fluid communication between chamber portions **328A** and **328B** through or otherwise across the piston wall. In the alternative, housing wall **326** and/or end wall **324** can include one or more passages or ports extending therethrough that will permit pressurized gas transfer into and out of chamber portion **328A** and/or **328B.** For example, end wall portion **332** of housing wall 326 can include one or more passage or ports **344** extending therethrough that permit pressurized gas transfer into and out of chamber portion **328A** of damping chamber **328.** Additionally, end wall **324** can include one or more passages or ports **346** extending therethrough that permit pressurized gas transfer into and out of chamber portion **328B** of damping chamber **328.** Furthermore, one or more of the passages or ports provided on or along the walls or wall portions (e.g., end wall **324,** and portions **330** and/or **332** of housing wall **326**) of damper element **280** can optionally include a flow control valve that restricts pressurized gas flow through the corresponding passage or port to flow in a single direction. For example, end wall portion **332** includes a passage or port **344A** that extends therethrough. A unidirectional or single direction flow control valve of a suitable type, kind and/or construction is disposed on or along the end wall portion and restricts pressurized gas flow to a single direction. In the exemplary arrangement shown in FIGS. 3-7, a one-way valve **348** is fluidically associated with passage **344A** and permits pressurized gas transfer into chamber portion **328A** through passage **344A** while substantially inhibiting pressurized gas transfer out of chamber portion **328A** through passage **344A.** As such, in the exemplary arrangement shown, pressurized gas transfer out of chamber portion **328A** occurs only through the remaining one or more of passages **344.**

Gas spring and gas damper assembly **200** is shown in FIG. 3 supported between upper and lower structural components **USC** and **LSC** and having an assembly height, which is represented in FIG. 3 by reference dimension **AH1,** that corresponds to an initial height condition of the gas spring and gas damper assembly. In some cases, such an initial height condition may be referred to as a design height. At such a design height, rolling lobe **262** is disposed approximately at a design position along side wall portion **240** of piston **208.** Additionally, at such a design height, damper piston **288** is disposed at a design position along side wall **294** within damping chamber **300,** which, in turn, acts to position piston wall **302** of damper piston **304** at a design position along side wall portion **330** within damping chamber **328.**

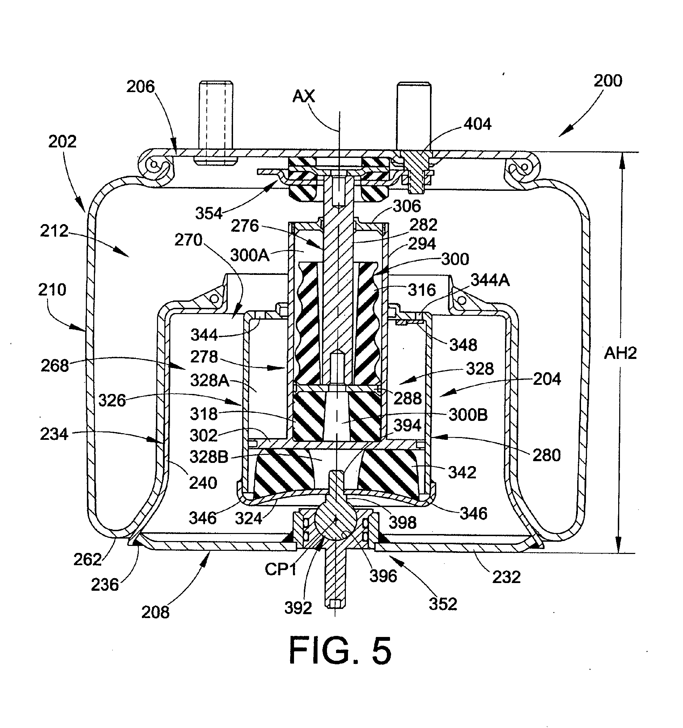

As gas spring and gas damper assembly **200** is displaced into a compressed condition, which may be referred to in the art as a jounce condition, bead plate **206** and piston **208** are moved toward one another and may reach a compressed height, which is represented in FIG. 5 by reference dimension **AH2,** that is less than design height **AH1.** As bead plate **206** and piston **208** are displaced toward one another, damper rod **282** and damper piston **288** of damper element **276** are also displaced toward piston **208.** Initially, the longitudinal forces acting on damper element **276** may be insufficient to further compress biasing element **318,** which, due to the direction of displacement, could be compressively loaded during such displacement. As such, biasing element **318** may remain in approximately the same compressive condition and thereby transfer the longitudinal forces acting on damper element **276** into damper element **278.** In which case, damper element **278** would compress the pressurized gas contained within chamber portion **328B** and urge a portion of the pressurized gas to flow out of the chamber portion through passages **346** in end wall **324** and into piston chamber **268.** It will be recognized that upon sizing and configuring passages **346** such that an appropriate total orifice area (e.g., total cross-sectional area for the active passages) for a given application is provided, such a flow of pressurized gas through passages **346** can operate to dissipate a portion of the energy acting on assembly **200** and thereby provide a damping action thereto.

As damper element **278** is displaced toward end wall **324,** damper piston **304** will contact bumper **342.** As discuss above, bumper **342** may also operate as a biasing element that includes a spring rate and that will deflect upon the application of a sufficiently-high longitudinal force thereto. Upon contacting bumper **342** with such a sufficiently-high force, damper piston **304** of damper element **278** will continue to urge pressurized gas through passages **346** and will also compress bumper **342,** such as is shown in FIG. 5, for example. In some cases, bumper **342** may be compressed or otherwise deformed by an amount sufficient to fluidically isolate passages **346** from chamber portion **328B** and thereby prevent further flow of pressurized gas through passages **346.** In other cases, however, bumper **342** may be configured such that passages **346** remain in fluid communication with chamber portion **328B** even at the maximum deformation of bumper **342.**

Additionally, upon contacting bumper **342** or at some point earlier thereto or occurring thereafter, the longitudinal force acting on damper element **276** may result in biasing element **318** being compressed or otherwise deflected, such as is shown in FIG. 5, for example, thereby permitting damper piston **288** to translate along side wall **294** in a direction toward piston wall **302.** During assembly of damper element **278,** it may be desirable to preload biasing elements **316** and **318.** As such, biasing element **316** may expand slightly upon translation of damper piston **288** toward piston wall **302.** Depending upon the magnitude of the translation of damper piston **288** toward piston wall **302,** biasing element **316** may separate from end wall **306.** While it will be appreciated that the preload level of biasing elements **316** and **318** may vary from application to application, one exemplary range for the preload level can be from approximately 2% to approximately 15% of the design load of the gas spring assembly.

Furthermore, it will be recognized that as assembly **200** is compressed, the gas pressure within spring chamber **212** and piston chamber **268** increases, at least temporarily. It has been recognized that gas damping has a relationship to the magnitude of the difference between the pressure of the gas within the damping chamber (e.g., chamber portion **328B**) and the pressure of the gas into which the gas from the damping chamber flows (e.g., piston chamber **268**). Thus, increasing the pressure within the damping chamber (e.g., chamber portion **328B**) and/or decreasing the pressure of the surrounding gas into which the gas from the damping chamber flows (e.g., piston chamber **268**) can result in improved damping performance.

In addition to acting as a biasing element and preventing direct contact between piston wall **302** and end wall **324,** bumper **342** may also improve the damping performance of damper **204** during compression by taking up volume within chamber portion **328B** and thereby causing the gas pressure within the chamber portion to increase at a faster rate. In a preferred arrangement, gas damper assembly **206** will operate to build gas pressure within chamber portion **328B** at the same or a faster rate than the rate at which the pressure is increasing within the spring and piston chambers due to compression of assembly **200.** In such case, the same or a greater differential pressure can be achieved, which is expected to result in improved gas damping performance.

As described above, end wall portion **332** of housing wall **326** includes one or more passages **344** extending therethrough in fluid communication with chamber portion **328A** of damping chamber **328.** As damper piston **304** of damper element **278** is displaced toward end wall **324** of damper element **280,** the volume of chamber portion **328A** increases, which may initially result in a reduced pressure level within the chamber portion. As discussed above, however, the pressure level within spring chamber **212** and piston chamber **268** is increasing at this same time. As such, a portion of the pressurized gas within the spring and piston chambers will flow through passages **344** and into chamber portion **328A,** upon sizing and configuring passages **344** such that an appropriate total orifice area (e.g., total cross-sectional area for the active passages) for a given application is used. Additionally, one or more of passages **344,** such as passage **344A,** for example, can be operatively associated with a one-way flow control device, such as valve **348,** for example, that will permit additional pressurized gas transfer into chamber portion **328A** while permitting an appropriate total orifice area to be used for damping purposed during displacement of the assembly in the opposing direction (i.e., during extension).

One benefit of permitting pressurized gas from the spring and piston chambers to flow into chamber portion **328A** is that an overall reduction in the pressure within spring chamber **212** and piston chamber **268** can be achieved. And, as discussed above, improved damping performance can result from increasing the differential pressure between the gas within the damping chamber (e.g., chamber portion **328B**) and the pressure of the gas into which the gas from the damping chamber flows (e.g., piston chamber **268**). Another benefit of permitting pressurized gas from the spring and piston chambers to flow into chamber portion **328A** is that the gas pressure within chamber portion **328A** is at least temporarily increased. As will be discussed in greater detail hereinafter, such an increased pressure level can provide a further increased pressure differential between the gas within chamber portion **328A** and the gas into which the gas from chamber portion **328A** will flow during extension.

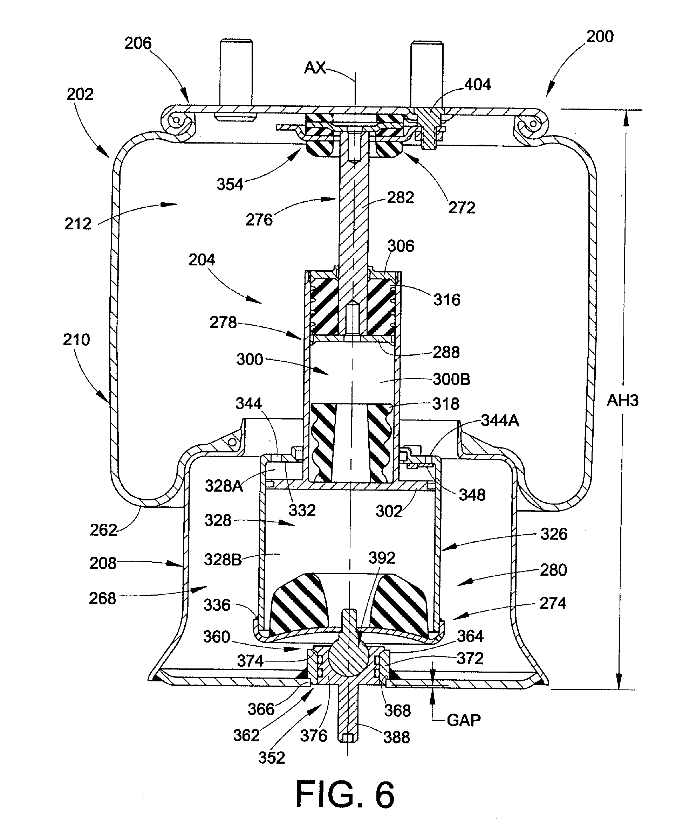

As gas spring and gas damper assembly **200** is displaced into an extended condition, which may be referred to in the art as a rebound condition, bead plate **206** and piston **208** are moved away one another and may reach an extended height, which is represented in FIG. 6 by reference dimension **AH3,** that is greater than design height **AH1.** As bead plate **206** and piston **208** are displaced away from one another, damper rod **282** and damper piston **288** of damper element **276** are also displaced away from piston **208.** Initially, the longitudinal forces acting on damper element **276** may be insufficient to further compress biasing element **316,** which, due to the direction of displacement, could be compressively loaded during such displacement. As such, biasing element **316** may remain in approximately the same compressive condition and thereby transfer the longitudinal forces acting on damper element **276** into damper element **278.** In which case, damper element **278** would compress the pressurized gas contained within chamber portion **328A** and urge a portion of the pressurized gas to flow out of the chamber portion through one or more of passages **344** in end wall portion **332** of housing wall **326** and into spring chamber **212.** It will be appreciated that valve **348** will cause passage **344A** to remain fluidically isolated from chamber portion **328A,** under such conditions, such that pressurized gas does not flow out of the chamber portion through passage **344A.**

It will be appreciated that pressurized gas within chamber portion **328A** is capable of flowing through passages at a given rate depending upon various factors, such as the total orifice area of passages **344,** for example. As such, continued extension of assembly **200** can compress the gas within chamber portion **328A** and thereby increase the pressure level thereof. This increased pressure level may, at some point, generate a sufficiently-high longitudinal force acting on damper element **276** that results in biasing element **316** being compressed or otherwise deflected, such as is shown in FIG. 6, for example, thereby permitting damper piston **288** to translate along side wall **294** in a direction toward end wall **306.**

Additionally, it will be recognized that as assembly **200** is extended, the gas pressure within spring chamber **212** and piston chamber **268** decreases, at least temporarily. At that same time, the gas pressure within chamber portion **328A** is increasing, such as has been described above, for example. As a result, an increased differential pressure between the gas within the damping chamber (e.g., chamber portion **328A**) and the pressure of the gas into which the gas from the damping chamber flows (e.g., spring chamber **212**) may be achieved, which may provide increased damping performance. Additionally, as described above, valve **348** can act as a charging valve that permits an increased volume of pressurized gas to transfer into chamber portion **328A** during compression, which can result in an increased overall pressure level within the chamber portion. Upon transitioning to extension, this increased overall pressure level represents the initial pressure level of the pressurized gas within chamber portion **328A** as the chamber portion begins to undergo compression, as described above.

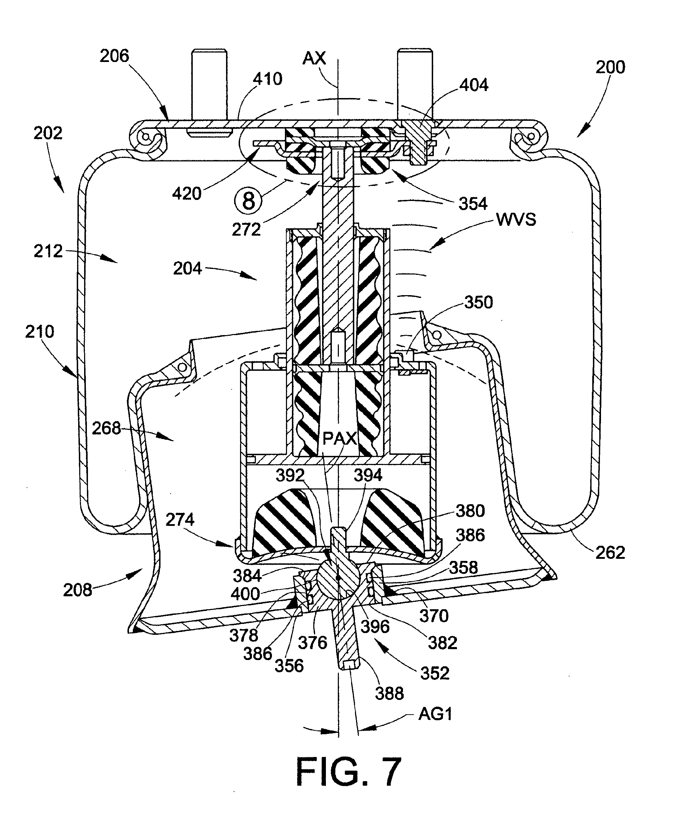

Gas spring and gas damper assembly can optionally include any number of one or more additional elements, features and/or components. For example, a distance sensing device can be operatively connected on or along one of the components of the gas spring assembly or the gas damper assembly. As shown in FIGS. 4 and 7, for example, a height sensor **350** can be operatively secured on or along end wall portion **332** of housing wall **326** and can transmit suitable electromagnetic or ultrasonic waves WVS in an approximately longitudinal direction toward bead plate **206**. It will be appreciated, however, that other arrangements could alternately be used.

It will be recognized that the foregoing discussion of FIGS. 3-6 regarding the displacement of gas spring and gas damper assembly **200** from a design height to a compressed height and an extended height included movement in a substantially longitudinal direction. In many applications, such as vehicle applications, for example, conventional gas spring assemblies are often displaced such that the first or upper end member (e.g., bead plate **206**) and the second or lower end member (e.g., piston **208**) are disposed at an angle relative to one another. In some cases, the angle may change (e.g., increase or decrease) as the end members are displaced toward and away from one another. It will be appreciated that conventional gas spring assemblies can typically accommodate such angular misalignments. In some cases, however, the gas spring assembly will include an internally mounted device, such as a rebound limiter or a spring aid, for example, that can limit the amount of angular misalignment that can be accommodated.

Gas spring and gas damper assembly **200** is another example of a gas spring assembly that includes an internally mounted device. In the present case, the internally mounted device takes the form of gas damper assembly **204** that is substantially-entirely contained within gas spring assembly **202.** As described above, gas damper assembly **204** extends longitudinally between an end **272** that is operatively connected to bead plate **206** and an end **274** that is operatively connected to piston **208.** For the subject matter of the present disclosure to be capable of broad use in a wide variety of applications, it is desirable for gas spring assembly **202** to be capable of operation in applications and operating conditions that can result in relatively high misalignment conditions without interfering with the operation and/or seal integrity of gas damper assembly **204.** As such, end **274** of gas damper assembly **204** can be operatively connected with piston **208** by way of a high-articulation misalignment mount **352** that is capable of freely compliant (e.g., non-resilient) articulation, such as is shown in FIGS. 3-7. Additionally, end **272** of gas damper assembly **204** can be operatively connected with bead plate **206** by way of a low-profile misalignment mount **354,** such as is shown in FIGS. 3-7. It will be appreciated, however, that mounts **352** and **354** are optional and that either one or both of mounts **352** and **354** can, optionally, be included on or used in connection with gas spring and gas damper assembly **200.**

With reference to FIG. 7, gas spring and gas damper assembly **200** is illustrated with bead plate **206** disposed approximately transverse to longitudinal axis **AX** and with gas damper assembly **204** extending therefrom in a substantially longitudinal direction. Piston **208** is shown as including a piston axis **PAX** and disposed at an angle relative to longitudinal axis **AX,** which angle is represented in FIG. 7 by angular reference dimension **AG1.** Additionally, as described above, piston **208** includes a piston body **230** having a base member **232** that is integrally formed with or otherwise assembled together with an outer shell **234.** Regardless of the configuration and/or construction of piston **208** that is used, base member (or base portion) **232** can include an opening wall **356** (FIG. 7) that extends through the base member between inside surface **264** and outside surface **266** such that an opening (not numbered) is formed through the base member. In a preferred arrangement, opening wall **356** and the opening formed thereby are substantially centrally located on or along the base member, such as in substantial alignment with piston axis **PAX,** for example.

With further reference to FIG. 7, high-articulation misalignment mount **352** includes a mount socket **358** that extends longitudinally along piston axis **PAX** between an end **360** (FIG. 6) and an end **362** (FIG. 6) that is spaced longitudinally from end **360.** Mount socket **358** can be operatively connected on or along base member **232** in any manner suitable for forming a substantially fluid-tight seal with the base member and capable of transferring forces between gas damper assembly **204** and base member **232,** such as may occur during use in operation as described above, for example. In the exemplary arrangement identified in FIG. 7, mount socket **358** includes an outer surface **364** (FIG. 6) that has a cross-sectional dimension (e.g., a diameter) that is greater than a cross-sectional dimension (e.g., a diameter) of opening wall **356.** Mount socket **358** also includes a portion **366** (FIG. 6) that has a cross-sectional dimension (e.g., a diameter) that is less than the cross-sectional dimension of outer surface **364** and forms a radially-outwardly extending shoulder wall **368** (FIG. 6) along the mount socket, such as along end **362** thereof, for example. Portion **366** can be received within the opening formed by opening wall **356** such that shoulder wall **368** can abuttingly engage inside surface **264** of base member **232.** Additionally, mount socket **358** is shown as being secured along base member **232** using a flowed-material joint **370** that forms a substantially fluid-tight seal with the base member. It will be appreciated, however, that other securement arrangements could alternately be used.

Mount socket **358** also includes an inner surface **372** (FIG. 6) that at least partially defines a passage (not numbered) extending through the mount socket. In a preferred arrangement, inner surface **372** (FIG. 6) is substantially cylindrical. Additionally, mount socket **358** can optionally include a load-transmitting feature, such as, for example, may be disposed toward end **360** of the mount socket. In the exemplary embodiment shown in FIGS. 3-7, the load-transmitting feature takes the form of a frustoconical surface **374** (FIG. 6) extending from along the inner surface in a radially outward direction.

High-articulation misalignment mount **352** also includes a mounting member **376** that is received in and supported on mount socket **358.** Mounting member **376** includes an outer surface **378,** which is dimensioned to be received within the passage formed by inner surface **372** and extending through mount socket **358.** Mounting member **376** also includes an end surface **380** and an opposing end surface **382.** Additionally, a load-transmitting feature, such as a surface **384,** for example, can extend in a radially-outward direction, such as from along outer surface **378.** In a preferred arrangement, the load-transmitting feature of the mounting member is complimentary to the load-transmitting feature provided along mount socket **358.** For example, in the arrangement shown in FIGS. 3-7, surface **384** can have a frustoconical shape with approximately the same included angle (not numbered) as frustoconical surface **374.**

It will be recognized that high-articulation misalignment mount **352** utilizes a passage extending through the substantially fluid-tight envelope of the gas spring assembly. As such, high-articulation misalignment mount **352** preferably includes one or more sealing elements that form and maintain a substantially fluid-tight seal therealong to prevent or at least minimize pressurized gas loss through the high-articulation misalignment mount. For example, one or more sealing elements, such as sealing elements **386,** for example, can be disposed between mount socket **358** and mounting member **376** such that a substantially fluid-tight seal is formed therebetween. In the exemplary arrangement shown in FIGS. 3-7, a plurality of sealing elements 386 are spaced longitudinally from one another and are at least partially received within grooves (not numbered) formed into the mounting member. It will be appreciated, however, that other arrangements could alternately be used.

A mounting stud **388** projects axially-outwardly from along end surface **382** of mounting member **376** and can include a plurality of threads suitable for receiving a corresponding securement device, such as a threaded nut **390** (FIG. 3), for example. Alternately, a threaded passage (not shown) could extend into the mounting member and could receive a corresponding securement device, such as a threaded fastener, for example. As shown in FIG. 3, mounting stud **388** is operatively connected along lower structural component **LSC** using threaded nut **390.** Mounting member **376** is preferably dimensioned such that upon securement of the mounting member in such a manner, one load-transmitting feature (e.g., surface **384**) of the mounting member will abuttingly engage the corresponding load-transmitting feature (e.g., surface **374**) of the mount socket. To ensure such abutting engagement, mounting member **376** is preferably dimensioned such that end surface **382** remains spaced longitudinally-inwardly from outer surface **266** of base member **232** and such that a gap, which is represented in FIG. 6 by reference dimension **GAP,** is formed and maintained between end surface **382** and outer surface **266** of base member **232.**

High-articulation misalignment mount **352** also includes a joint end **392** that is operatively connected to mounting member **376** and is capable of undergoing angular displacement relative thereto. In a preferred arrangement, joint end **392** will be capable of undergoing an angular deflection of up to at least approximately 20 degrees and can, optionally, rotate, swivel or otherwise accommodate such angular deflection over 360 degrees of rotation. It will be appreciated, however, that other arrangements could alternately be used.

Joint end **392** can include a mounting stud **394** (FIG. 5) that is adapted for securement on, along or otherwise to a device mounted internally to the gas spring assembly (e.g., gas damper assembly **204**). In the present exemplary embodiment, mounting stud **394** threadably engages and is, thus, secured to end wall **324** of damper element **280.** It will be appreciated, however, that other securement arrangements could alternately be used. Additionally, joint end **392** includes a spherical joint surface **396** (FIG. 5) that is disposed generally opposite mounting stud **394** and includes a centerpoint or pivot **CP1** (FIG. 5). A side wall **398** (FIG. 5) can extend between mounting stud **394** and spherical joint surface **396** and can include a plurality of flats (not shown) or other engagement features for threadably attaching or otherwise securing joint end **392** to the internally mounted device (e.g., gas damper assembly 204).

As identified in FIG. 7, mounting member **376** includes a corresponding spherical joint surface **400** that at least partially forms a spherical joint recess (not numbered) extending into the mounting member from along end surface **380.** Spherical joint surface **400** is complimentary to spherical joint surface **396** of joint end **392** such that the joint end can undergo angular deflection about centerpoint or pivot **CP1** (FIG. 5), such as in the manner described above.

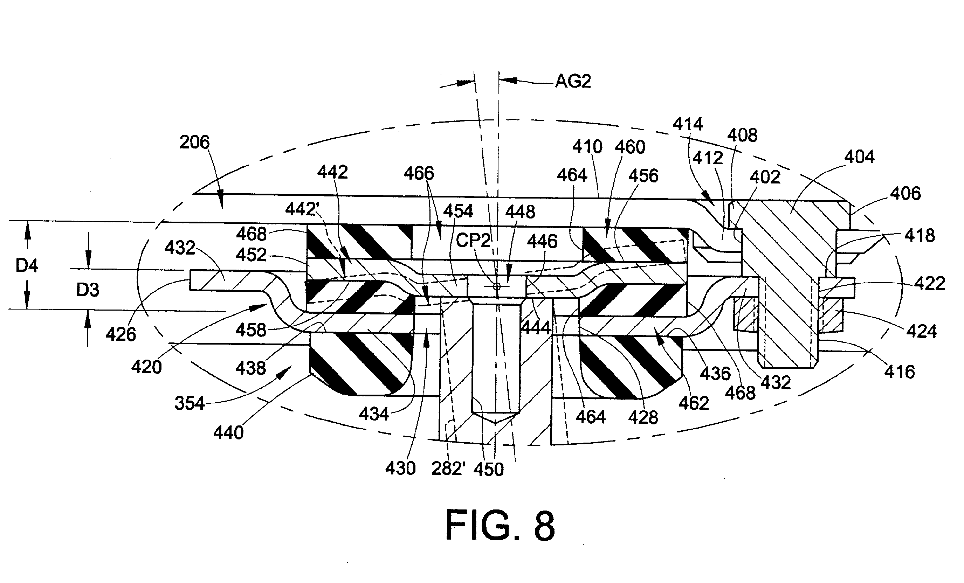

With reference now to FIGS. 7 and 8, low-profile misalignment mount **354** is shown as being operatively connected between and end member of a gas spring assembly and an end of an internally mounted device, and is capable of resilient angular deflection that urges at least a portion of the internally mounted device toward a neutral orientation, such as an orientation that is approximately aligned with axis **AX.** In the exemplary arrangement shown, low-profile misalignment mount **354** is secured between bead plate **206** of gas spring assembly **202** and end **272** of gas damper assembly. It will be appreciated, however, that the arrangement shown and described herein is merely one example of a suitable arrangement and that low-profile misalignment mount **354** could be used in operative association with a wide variety of other components and/or assemblies without departing from the subject matter of the present disclosure.

An end member or other component of a gas spring assembly can include one or more features for securement of mount **354** thereto. For example, bead plate **206** can include an opening wall **402** that at least partially defines a hole or opening (not numbered) extending through the bead plate. A securement device, such as a threaded mounting stud **404** can extend through the opening such that at least a portion of the mounting stud is in fluid communication with spring chamber **212.** It will be appreciated that a substantially fluid-tight seal is preferably formed between bead plate **206** and mounting stud **404** in a suitable manner. For example, a flowed-material joint or seal (not shown) can be formed between the components. Additionally, or in the alternative, mounting stud **404** can include an outer side wall **406** that is dimensioned to form a press-fit connection with opening wall **402.** Upon forcing mounting stud **404** into the opening formed by opening wall **402,** a substantially fluid-tight seal can be formed between outer side wall **406** and opening wall **402.**

Mounting stud **404** can include a head **408** that has a thickness (not identified). In some cases, it may be desirable to prevent head **408** from projecting beyond an outer surface **410** of bead plate **206.** In which case, a portion **412** of bead plate **206** can, optionally, be deflected in a longitudinally-inward direction such that a recess **414** is formed along the exterior of the bead plate for receiving head **406** of mounting stud **404.**

Mounting stud **404** can include a threaded portion **416** that projects longitudinally-outwardly from a shoulder wall **418** that extends radially-inwardly from along outer side wall **406.** In some cases, a plurality of mounting studs **404** can be used and may be disposed in a suitable pattern or configuration on or along bead plate or other end member of the gas spring assembly. As shown in FIG. 2, three mounting studs **404** are disposed circumferentially about axis **AX.** It will be appreciated, however, that any other suitable number and/or configuration of mounting studs could alternately be used.

Low-profile misalignment mount **354** also includes a retainer plate **420** that is disposed within the spring chamber of the gas spring assembly. Retainer plate **420** can be of any suitable size, shape and/or configuration. In the exemplary arrangement shown, retainer plate **420** includes a plurality of opening walls **422** each forming an opening (only one of which is shown) extending through the retainer plate. Opening walls **422** and the corresponding opening formed by each thereof are disposed in a pattern or arrangement that is complimentary to the arrangement of mounting studs **404** such that the retainer plate can be received on and secured to mounting studs **404** in a suitable manner, such as through the use of a threaded nut **424,** for example. Outer periphery **426** of retainer plate **420** can be of any suitable size, shape and/or configuration, such as being of a circular shape, for example. In the exemplary embodiment illustrated in FIG. 3, for example, outer periphery **426** has an approximately triangular shape.

Retaining plate **420** is also shown as including an inner side wall **428** that at least partially defines a central passage **430** extending through the retaining plate. Additionally, retaining plate **420** can, optionally, include one or more outer wall portions **432** through which opening walls **422** extend, and can, optionally, include an offset portion **434** that is disposed radially-inwardly from outer wall portions **432** and is spaced longitudinally therefrom. Retaining plate **420** is supported along mounting studs **404** such that outer wall portions **432** are disposed a first distance from bead plate **206,** which distance is represented in FIG. 8 by reference dimension **D3.** And, retaining plate **420** is oriented such that offset portion **434** is disposed a second distance from bead plate **206,** which distance is represented in FIG. 8 by reference dimension **D4,** that is greater than the first distance.

Additionally, retaining plate **420** includes a surface **436** and an opposing surface **438.** In the arrangement shown in FIGS. 2-8, retaining plate is oriented such that surface **436** is facing toward bead plate **206** and surface **438** is facing away from bead plate **206.** Low-profile misalignment mount **354** can also, optionally, include a bumper **440** that is disposed along surface **438** and can be secured thereto in a suitable manner, such as through the use of an adhesive connection, for example.

Low-profile misalignment mount **354** further includes an end plate **442** that is adapted for securement on or along a feature or component of the associated internal device that is connected between the opposing end members of the gas spring assembly within the spring chamber thereof. In the present case, gas damper assembly **204** represents the associated internal device. As such, end **284** of damper element **276** is operatively connected to mount **354,** such as by securing end plate **442** on or along an end wall **444** of damper rod **282.** As one example, end plate **442** can include an opening wall **446** that at least partially defines an opening **448** extending through the end plate. A securement feature, such as a threaded hole **450,** for example, can be provided along end wall **444** of damper rod **282** and a suitable securement device, such as a threaded fastener (not shown), for example, can attached the end plate and damper rod to one another.

In the exemplary arrangement shown in FIGS. 3 and 5-8, end plate **442** includes an outer wall portion **452** and an offset wall portion **454** that is disposed radially-inwardly from outer wall portion **452** and spaced longitudinally therefrom, such as in the manner described in connection with the configuration of retaining plate **420,** for example. It will be appreciated that end plate **442** extends radially-outwardly from along damper rod **282** in a direction generally transverse to longitudinal axis **AX.**

End plate **442** also includes a surface **456** and an opposing surface **458.** End plate **442** is oriented such that surface **456** is facing toward bead plate **206** and such that surface **458** is facing toward surface **436** of retaining plate **420.** Low-profile misalignment mount **354** includes bushing elements **460** and **462** disposed on opposing sides of end plate **442.** In the exemplary embodiment shown, bushing element **460** is disposed between bead plate **206** and surface **456** of end plate **442,** and bushing element **462** is disposed between surface **436** of retaining plate **420** and surface **458** of end plate **442.** Bushing elements **460** and **462** can be of any suitable shape and/or configuration, such as including an inner side wall **464** that at least partially defines an opening **466** extending therethrough and an outer side wall **468** that at least partially defines an outer periphery of the bushing elements.

Bushing elements **460** and **462** are preferably formed from an elastomeric material, such as a rubber material (e.g., synthetic or natural rubber) or a thermoplastic elastomer (e.g., a polyurethane-based material), that will permit the bushing elements to deform as the end member of the gas spring assembly (e.g., bead plate **206**) and the associated internal device (e.g., damper rod **282** of gas damper assembly **204**) undergo angular displacement relative to one another, such as is represented by dashed lines **282'** in FIG. 8. As is represented by dashed lines **442',** it will be appreciated that end plate **442** will move relative to bead plate **206** and together with damper rod **282** due to the substantially rigid connection therebetween. As such, end plate **442** will urge bushing elements **460** and **462** to deform and, depending upon the materials and/or thickness of the bushing elements, at least some deformation will be permitted thereby. It will be appreciated that such relative movement may involve angular deflection about a centerpoint or pivot **CP2** (FIG. 8), such as is represented in FIG. 8 by angular reference dimension **AG2.**

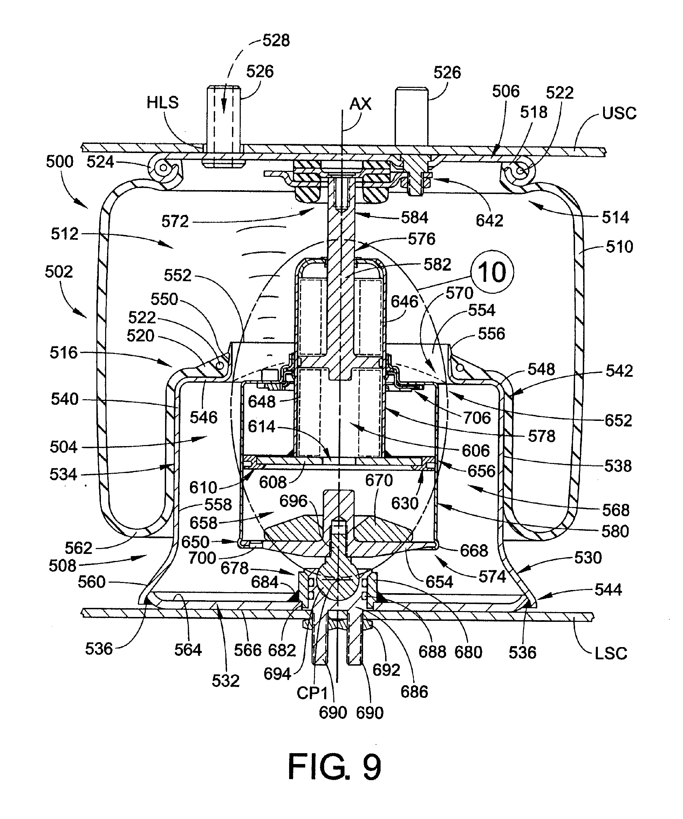

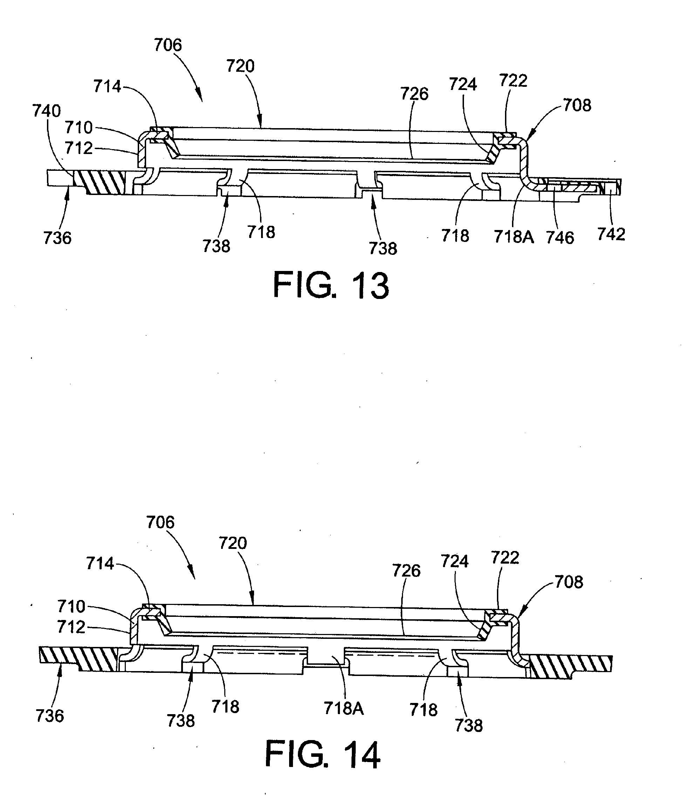

Another example of a gas spring and gas damper assembly **500** in accordance with the subject matter of the present disclosure is shown in FIGS. 9-14, such as may be used as gas spring and gas damper assemblies **110** in FIG. 1, for example. Gas spring and gas damper assembly **500** includes a gas spring assembly **502** and a gas damper assembly **504** that is substantially-entirely housed within the gas spring assembly. Gas spring assembly **502** can be of any type, kind, construction, configuration and/or arrangement, such as is shown in FIG. 9 as being of a rolling lobe-type construction, for example, and can have a longitudinal axis and can include a first end member, an opposing second end member spaced longitudinally from the first end member and a flexible wall that is operatively connected therebetween. It will be appreciated, however, that other gas spring assembly constructions could alternately be used, such as a convoluted bellow-type construction, for example. Additionally, gas spring assembly **502** can be operatively connected between opposing structural components in any suitable manner, such as, for example, are generally represented in FIG. 9 by upper structural component **USC** (e.g., vehicle body **102** in FIG. 1) and lower structural component **LSC** (e.g., axle **104** in FIG. 1).

In the exemplary arrangement shown in FIGS. 9-14, gas spring assembly **502** has a longitudinally-extending axis **AX** and includes a first or upper end member, such as a bead plate **506,** for example, and an opposing second or lower end member, such as a piston **508,** for example, that is spaced longitudinally from the first end member. A flexible wall, such as a flexible sleeve **510,** for example, can be secured between the first end member (e.g., bead plate **506**) and the second end member (e.g., piston **508**) in a suitable manner such that a spring chamber **512** is at least partially formed therebetween.

Flexible sleeve **510** extends in a generally longitudinal manner between a sleeve end **514** and a sleeve end **516.** Flexible sleeve **510** includes a mounting bead **518** along sleeve end **514** and a mounting bead **520** along sleeve end **516.** Mounting beads **518** and **520** can optionally include a reinforcing element or other suitable component, such as a bead wire **522,** for example.

End **514** of flexible sleeve **510** can be secured on or along the end member in any suitable manner. For example, mounting bead **518** of the flexible sleeve can be captured by an outer peripheral edge **524** of bead plate **506.** The peripheral edge can be deformed around mounting bead **218** in any manner suitable for forming a substantially fluid-tight seal therewith. One or more securement devices, such as mounting studs **526,** for example, can be included along bead plate **506** and project through the associated structural component (e.g., upper structural component **USC**) in a manner suitable for receiving a corresponding securement device or element, such as a threaded nut (not shown), for example, to secure the first end member to the associated structural component. In the exemplary embodiment shown in FIG. 3, mounting studs **526** project axially outwardly from the bead plate and extend through holes **HLS** in upper structural component **USC.**

Additionally, a fluid communication port, such as a fluid passage **528,** for example, can optionally be provided on or along the first or upper end member to permit fluid communication with spring chamber **512.** In the exemplary embodiment shown, fluid passages **528** extend through mounting studs **526** and are in fluid communication with the spring chamber. It will be appreciated, however, that any other suitable fluid communication arrangement could alternately be used.

Mounting bead **520** of flexible sleeve **510** can be secured to the second end member in any suitable manner. As one example, the mounting bead could be retained on or along the piston using one or more retaining elements or components (e.g., crimp rings or retaining caps). As another example, mounting bead **520** could be friction fit along a wall portion of piston **508** and, optionally, at least partially retained thereon using a radially outwardly-extending projection. It will be appreciated, however, that any other suitable arrangement and/or configuration could alternately be used.

In the exemplary embodiment in FIGS. 9-14, for example, piston **508** is shown as including piston body **530** that is formed from a base member **532** and an outer shell **534,** which is operatively connected to the base member such that a substantially fluid-tight seal is formed therebetween, such as through the use of a flowed-material joint **536** extending circumferentially about axis **AX,** for example. It will be appreciated, however, that in other cases, a piston body could be used in which the base member and outer shell are integrally formed with one another, such as through the use of an injection molding process, for example. In such case, the base member could be alternately referred to as a base portion or base member portion, and the outer shell could be alternately referred to as an outer shell portion.

Outer shell (or outer shell portion) **534** includes a shell wall **538** that extends circumferentially about axis **AX.** Shell wall **538** includes an outer side wall portion **540** that extends in a generally longitudinal direction between an end **542,** which is disposed toward bead plate **506,** and an end **544,** which is disposed in longitudinally spaced relation to end **542** and toward lower structural component **LSC.** Shell wall **538** also includes an end wall portion **546** that transitions into outer side wall portion **540** at a curved or shoulder portion **548.** An inner side wall portion **550** projects from end wall portion **546** in a direction extending axially away from end **544.** Inner side wall portion **550** terminates in the axial direction at an end **552.** Additionally, inner side wall portion **550** includes an outer surface (not numbered) facing radially outward and an inner surface **554** facing radially inward. A projection **556** extends radially-outwardly from along the outer surface adjacent end **552** of inner side wall portion **550.**

It will be recognized that a wide variety of shapes, profiles and/or configurations can and have been used in forming the outer side wall of a gas spring piston. As such, it will be appreciated that outer side wall portion **540** of shell wall **538** can be of any suitable shape, profile and/or configuration and that the profile shown in FIGS. 2-7 is merely exemplary. Mounting bead **520** of flexible sleeve **510** can be received on or along the outer surface of inner side wall portion **550** such that a substantially fluid-tight seal is formed therebetween with projection **556** at least partially retaining mounting bead **520** on inner side wall portion **550.** Additionally, outer side wall portion **540** of shell wall **538** includes an inside surface **558** and an outside surface **560.** As such, a portion of flexible sleeve **510** extends along end wall portion **546** and outside surface **560** of outer side wall portion **540** such that a rolling lobe **562** is formed along piston body **530** and is displaced along the outer side wall portion as the gas spring assembly undergoes changes in overall height.

Base member **532** includes an inside surface **564** and an outside surface **566,** which can be disposed in abutting engagement with lower structural component **LSC.** Inside surface **564** of base member **532** and inside surface **558** of outer side wall portion **540** at least partially define a piston chamber **568** within piston **508.** Inner surface **554** of inner side wall portion **550** at least partially defines an opening or passage **570** into piston **508** by which piston chamber **568** is in fluid communication with spring chamber **512.** In a preferred arrangement, inner surface **554** defines an opening or passage (e.g., passage **570**) into piston chamber **568** that is of sufficient size to permit piston chamber **568** and spring chamber **512** to operate as a substantially unified fluid chamber. That is, in a preferred arrangement, passage **570** will be sufficiently large that minimal fluid flow restriction (e.g., approximately zero fluid flow restriction) will occur for pressurized gas flowing between spring chamber **512** and piston chamber **568** under typical conditions of operation.

Gas damper assembly **504** is shown in FIGS. 9-14 as being substantially entirely contained within gas spring assembly **502** and extending longitudinally between an end **572** that is operatively connected to bead plate **506** and an end **574** that is operatively connected to piston **508.** Gas damper assembly **504** includes a plurality of damper elements that are operatively interconnected with one another for telescopic extension and compression in relation to corresponding extension and compression of gas spring assembly **502.**

In the exemplary arrangement in FIGS. 9-14, gas damper assembly **504** is shown as including damper elements **576, 578** and **580** that are operatively interconnected with one another for telescopic extension and compression. Damper element **576** is operatively connected to the first end member (e.g., bead plate **506**) and extends from the first end member toward the second end member (e.g., piston **508**). Damper element **580** is operatively connected to the second end member (e.g. piston **508**) and extends from the second end member toward the first end member (e.g., bead plate **506**). Damper element **578** is disposed longitudinally between damper elements **576** and **580,** and is operatively interconnected therewith such that damper elements **576** and **578** can move relative to one another and such that damper element **578** and **580** can move relative to one another.

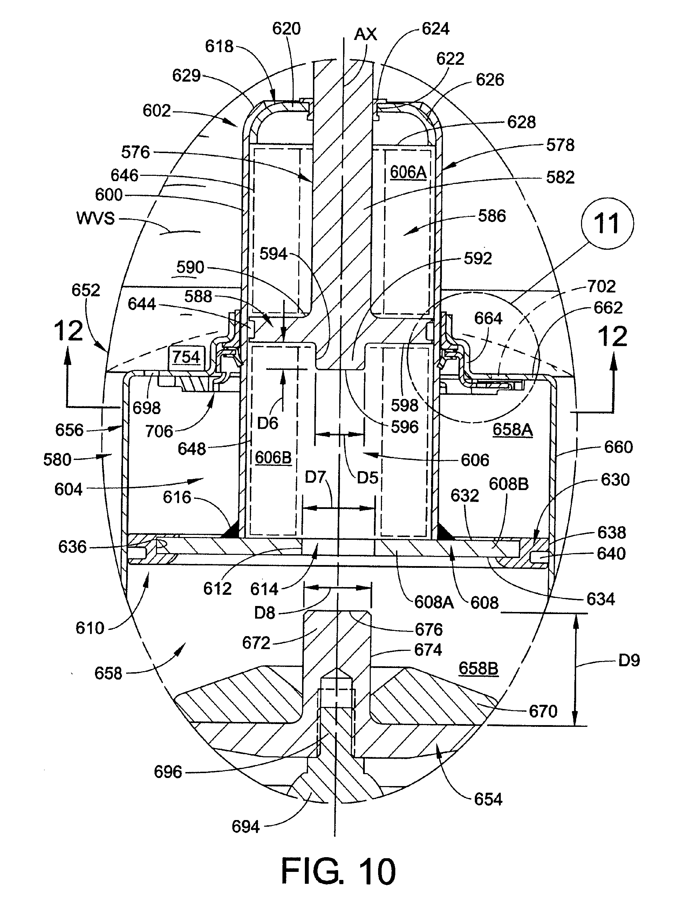

As shown in FIG. 10, damper element **576** includes a damper rod **582** that extends longitudinally from an end **584** (FIG. 9) to an end **586.** A damper piston **588** is disposed along end **586** of damper rod **582** and can be attached or otherwise connected thereto in any suitable manner. For example, in a one arrangement, damper piston **588** is integrally formed with damper rod **582** from a unitary mass of material (e.g., metal material, such as steel or aluminum, for example). In such case, a fillet **590** having a generous radius can be formed between damper rod **582** and damper piston **588.** Such an arrangement can provide an improved stress distribution and force transfer to, from and between the damper rod and the damper piston.

Additionally, damper element **576** can, optionally, include a piston stop **592** that projects axially outwardly beyond damper piston **588** in a direction opposite damper rod **582.** Piston stop **592** is at least partially defined by an outer side wall **594** and an end wall **596.** Outer side wall **594** can be of any suitable shape and/or configuration, such as cylindrical, for example. And, outer side wall **594** can be of any suitable cross-sectional size or dimension, such as is represented in FIG. 10 by reference dimension **D5.** Outer side wall **594** can extend outwardly in a direction away from an outer side surface **598** of damper piston **588** such that end wall **596** is spaced away from outer side surface **598** by a predetermined distance, such as is represented in FIG. 10 by reference dimension **D6.**

It will be appreciated that, if formed from a unitary mass of material, damper element **576** can be manufactured or otherwise produced in any suitable manner and/or through the use of any suitable processes. For example, damper element **576** could be formed from a unitary mass of steel material through the use of a cold-heading process. Alternately, other materials and/or processes could be used, such as impact extrusion and/or hot forging processes. Additional features, such as rod mounting threads, rod seal elements, wear-band glands, anti-rotation features and/or drive features, such as non-circular (e.g., hex-shaped) male and/or female drive features, for example, can optionally be included. Material treatments and/or coatings can also be included on or along one or more portions of the damper elements (e.g., damper elements **576, 578** and/or **580**).

Damper element **578** includes a side wall **600** extending circumferentially about axis **AX** between longitudinally-spaced ends **602** and **604** such that a longitudinally-extending damping chamber **606** is at least partially formed by side wall 600. A piston base wall **608** is disposed along end **604** of damper element **578.** In some cases, a portion **608A** of piston base wall **608** can, optionally, extend across an open end (not numbered) of side wall **600** to at least partially define damping chamber **606,** such as is shown in FIGS. 9 and 10, for example. A piston passage wall **612** can at least partially define a piston passage **614** that extends through portion **608A** of piston base wall **608.** It will be appreciated that piston passage **614** can be of any suitable size, shape and/or configuration, such as may be suitable for permitting fluid transfer into and out of damping chamber **606.** Piston passage **614** is shown in FIG. 10 as having a cross-sectional size or dimension, as is represented by reference dimension **D7.** In a preferred arrangement, piston passage **614** is of sufficient size to permit complimentary components and/or features, such as piston stop **592,** for example, to fit into and out of the piston passage and thereby extend through piston base wall **608.**

Another portion **608B** of piston base wall **608** can extend radially-outwardly beyond side wall **600** to at least partially form a damper piston **610** along end **604** of damper element **578.** It will be appreciated that piston base wall **608** can be secured on or along side wall **600** in any suitable manner, such as through the use of a flowed-material joint **616,** for example. In a preferred arrangement, a substantially fluid-tight connection can be formed between the side wall and the piston base wall.

Damper element **578** can also include an end cap **618** that is disposed along end **602** and extends across an open end (not numbered) of side wall **600** to thereby further enclose and define damping chamber **606.** End cap **618** is shown as including an end wall portion **620** with a passage wall **622** that at least partially defines a rod passage (not numbered) extending through the end wall. A bearing element and/or sealing element can, optionally, be included within or otherwise along the rod passage for abuttingly engaging damper rod **582** of damper element **576.** In the exemplary arrangement shown in FIGS. 9 and 10, a bushing **624** is disposed within the rod passage and secured along end wall portion **620.** End cap **618** also includes an outer peripheral wall portion **626** that terminates at a distal edge **628.** In the exemplary arrangement shown in FIGS. 9 and 10, outer peripheral wall portion **626** has a curved cross-sectional profile. It will be appreciated, however, that other profiles and/or configurations could alternately be used.

In some cases, end cap **618** can be formed as a metal stamping, such as a stamped steel or aluminum construction, for example. Additionally, side wall 600 can be formed from a malleable metal material, such as steel or aluminum, for example. In such case, a retaining portion **629** of side wall **600** can be deformed radially-inwardly to abuttingly engage or otherwise at least partially conform with outer peripheral wall portion **626** of end cap **618** to thereby retain the end cap within the open end of the side wall. Alternately, a flange could be formed along the open end of the side wall, and the end cap could be crimped or otherwise formed outwardly over the flange for securement to the side wall.

It has been recognized that conventional piston-cylinder arrangements often include a piston having a sealing element to reduce fluid transfer from one side of the piston to the other and a bearing to support radial loads. Known designs can result in increased thickness of the piston, which can, in some cases, limit the available stroke of such known piston-cylinder arrangements. Additionally, endless grooves, which are sometimes referred to as glands, are often included to receive and retain one or more sealing elements and/or radial bearings, such as wear bands, for example. In conventional constructions, pistons are often formed from a material having a relatively high strength, such as metal (e.g., steel or aluminum), for example, to withstand the axial and/or radial loads associated with the operation and use of the piston-cylinder arrangement. In such cases, the grooves (or glands) are often machined or otherwise formed into the piston, which can undesirably result in increased costs and/or time associated with manufacturing as well as other factors, such as increased material mass to accommodate such features, for example.

As such, damper piston **610** of damper element **578** can also include an outer piston wall **630** that can be operatively connected to piston base wall **608** in any suitable manner. In the exemplary arrangement shown in FIGS. 9 and 10, piston base wall **608** has opposing side surfaces **632** and **634,** and terminates at an outer edge wall **636.** Outer piston wall **630** extends radially-outwardly beyond outer edge wall **636** and thereby forms an outermost edge **638** of damper piston **610.** Outer piston wall **630** extends axially-outwardly beyond side surfaces **632** and **634,** and extends radially inwardly along the side surfaces to abuttingly engage the side surfaces for retainment of outer piston wall **630** on and along piston base wall **608** to thereby form damper piston **610.** One or more grooves or other features can also be formed on or along the outer piston wall. For example, a radially-inwardly extending groove **640,** such as may be suitable for receiving a sealing element (not shown) and/or a bearing element (not shown), for example, is shown extending endlessly around the outer piston wall along outermost edge **638.** It will be appreciated, however, that other arrangements and/or configurations could alternately be used.

The aforementioned construction of damper piston **610** can assist in minimizing overall piston thickness, and may thereby increase stroke and/or strength and/or may reduce mass and/or manufacturing costs. As can be observed from FIG. 10, a comparably thinner piston base wall can be used as a result of including the outer piston wall, which can function as a bearing and/or wear ring as well as incorporate the seal gland for receiving and retaining a sealing element. It will be appreciated that outer piston wall **630** can be secured on or along piston base wall **608** in any suitable manner. As one example, the outer piston wall could be formed by injection molding the outer piston wall over the piston base wall. Alternately, the outer piston wall could be formed as one or more components that are secured to the piston base wall in a suitable manner, such as through the use of a flowed-material joint, fasteners and/or snap features, for example. Furthermore, outer piston wall **630** can be formed from any suitable material or combination of materials. As one example, the outer piston wall can be formed from or otherwise include a polymeric material, such as nylon, for example, that includes a dry lubricant, such as molybdenum disulfide, for example.

As discussed above, damper elements **576** and **578** are operatively interengaged with one another for telescopic extension and compression. In the exemplary arrangement shown, damper piston **588** is disposed within damping chamber **606** and damper rod **582** extends out of damping chamber **606** through the rod passage (not numbered) that is at least partially defined by passage wall **622.** As such, end **584** of damper rod **582** is disposed outwardly of damping chamber **606** and can be operatively connected along bead plate **506** in a suitable manner, such as through the use of a misalignment mount **642,** for example, as is shown in FIG. 9. It will be appreciated that the construction, operation and interconnection of misalignment mount **642** with bead plate **506** and damper rod **582** of gas damper assembly **504** can be substantially identical to the function, operation and interconnection of misalignment mount **354** with bead plate **206** and damper rod **282** of gas damper assembly **204,** such as has been described in detail above in connection with FIGS. 3-7. For purposes of brevity and ease of reading, full detailed descriptions of misalignment mount **642** is not repeated here. However, it is to be distinctly understood that the foregoing description of misalignment mount **354** as well as the operation and interconnection thereof with bead plate **206** and damper rod **282** is equally applicable to misalignment mount **642,** bead plate **506** and damper rod **582.**

Damping chamber **606** is separated by damper piston **588** into chamber portions **606A** and **606B.** In some cases, it may be desirable to maintain chamber portions **606A** and **606B** in fluidic isolation from one another, such as by including one or more sealing elements (not shown) operatively disposed between damper piston **588** and side wall **600**. Additionally, it may be desirable to include one or more sealing elements (not shown) and/or bearing elements (e.g., bushing **624**) between damper rod **582** and passage wall **622** such that a substantially fluid-tight seal and/or wear-resistant interface can be formed therebetween. Furthermore, such a sealing element, if provided, could assist in maintaining damping chamber **606** and spring chamber **512** in fluidic isolation with one another, at least through the rod passage. In such case, additional fluid communication ports (not shown) can be selectively provided in one or more of damper piston **588,** end cap **618** and/or a portion **608A** of piston base wall **608** (e.g., piston passage **614**). Such additional fluid communication ports can be sized and configured to generate damping forces during relative movement between damper element **576** and damper element **578.**

It will be recognized that significant frictional forces may be generated by any sealing arrangements, if provided, that have been described above in connection with the interface between damper piston **588** and side wall **600** as well as in connection with the interface between damper rod **582** and passage wall **622.** In some cases, it may be desirable to avoid these frictional forces (or for other reasons) by forgoing the use of sealing elements along the interface between damper piston **588** and side wall 600 and/or along the interface between damper rod **582** and passage wall **622.** In such case, a friction reducing bushing or wear band can, optionally, be disposed between the damper piston and the side wall and/or between the damper rod and the passage wall. As identified in FIG. 10, friction-reducing bushings or wear bands **624** and **644** are respectively disposed between damper rod **582** and passage wall **622** and between damper piston **588** and side wall **600.**

Gas damper assembly **504** can also include at least one biasing element disposed within damping chamber **606** and can be operative to act between damper piston **588** and end cap **618** and/or portion **608A** of piston base wall **608.** In the exemplary arrangement shown in FIGS. 9-11, two biasing elements are included. Biasing element **646** is disposed within chamber portion **606A** and is operative to act on and between damper piston **588** and end cap **618.** Biasing element **648** is disposed within chamber portion **606B** and is operative to act on and between damper piston **588** and portion **608A** of piston base wall **608.** One benefit of including a biasing element, such as biasing element **646** and/or **648,** for example, within one or both of the chamber portions (e.g., chamber portions **606A** and **606B**) is that the biasing element can act as a bumper or cushion that impedes direct physical contact between damper piston **588** and a corresponding one of end cap **618** and/or portion **608A** of piston base wall **608.**

Another benefit of including a biasing element, such as biasing element **646** and/or **648,** for example, within one or both of the chamber portions (e.g., chamber portions **606A** and **606B**) is that the biasing element(s) can act to establish and/or control the longitudinal position of damper element **578** relative to other components of the gas damper assembly, such as has been discussed in detail above in connection with damper elements **276** and **278.** Additionally, during operation, the longitudinal forces acting between damper element **576** and damper element **578** will deflect biasing elements **646** and **648** in various manners, such as has been discussed in detail above in connection with damper elements **276** and **278.** It will be appreciated that a biasing force threshold will correspond with or otherwise have a relation to the spring rate of the one or more biasing elements (e.g., biasing elements **646** and/or **648**). As such, it will be recognized that where two biasing elements are used, such as biasing elements **646** and **648**, for example, the biasing elements could have different spring rates, such as, for example, by using different materials or combinations of materials for the biasing elements and/or by using different sizes, dimensions and/or proportions for the biasing elements.

For purposes of brevity and ease of reading, full detailed descriptions of the use and operation of biasing elements **646** and **648** with respect to the relative positioning and movements of damper elements **576** and **578** are not repeated here. However, it is to be distinctly understood that the foregoing descriptions of the use and operation of biasing elements **316** and **318** with respect to the relative positioning and movements of damper elements **276** and **278** are equally applicable to biasing elements **646** and **648** as well as damper elements **576** and **578.**

Damper element **580** is shown in FIGS. 9-11 as extending longitudinally between opposing ends **650** and **652** and including an end wall **654** disposed along end **650** and housing wall **656** that is secured to end wall **654** and at least partially defines a damping chamber **658** therebetween. End wall **654** can be operatively connected on or along the second end member (e.g., piston **508**) in a suitable manner. As illustrated in FIG. 9, for example, housing wall **656** is shown as including a side wall portion **660** extending longitudinally from along end wall **654** toward an end wall portion **662** of the housing wall. End wall portion **662** of housing wall **656** includes a passage wall portion **664** that at least partially defines a damper passage (not numbered) extending therethrough. End wall **654** and housing wall **656** can be operatively connected to one another in any suitable manner. For example, a threaded connection (not shown) or a flow-material joint (not shown) could be used. Alternately, as shown in FIG. 9, a crimped or other deformed material joint **668** could be used. In some cases, it may be desirable to form a substantially fluid-tight connection between the end wall and the housing wall. In other cases, a less fluid-tight connection could be used, such as a deformed material joint, for example.

As discussed above, damper elements **578** and **580** are operatively interengaged with one another for telescopic extension and compression. In the exemplary arrangement shown, a portion of damper element **578** is disposed within damping chamber **658** such that side wall **600** and end cap **618** of damper element **578** extend longitudinally-outwardly of damping chamber **658** through the damper passage (not numbered) that is at least partially defined by passage wall portion **664.** As such, end **602** of damper element **578** is disposed outwardly of damping chamber **658** and end **604** of damper element **578** is disposed within damping chamber **658,** such that damper piston **610** extends radially-outwardly toward side wall portion **660** of housing wall **656** and separates damping chamber **658** into chamber portions **658A** and **658B.**

In some cases, it may be desirable to permit fluid communication between chamber portions **658A** and **658B,** such as by including one or more friction-reducing bushings or wear bands disposed along the interface between side wall **600** and passage wall portion 664 of housing wall 656 and/or along the interface between outer piston wall **630** and side wall portion **660** of housing wall **656.** In a preferred embodiment, however, chamber portions **658A** and **658B** are maintained in fluidic isolation from one another, such as by including one or more sealing elements operatively disposed between side wall **600** and passage wall portion **664** of housing wall **656.** Additionally, such a preferred arrangement can include one or more sealing elements (not shown) disposed between outer piston wall **630** and side wall portion **660** of housing wall **656** such that a substantially fluid-tight seal is formed therebetween.

As discussed above, damper elements **578** and **580** are operatively interengaged with one another for telescopic extension and compression. As such, damper piston **610** of damper element **578** moves toward and away from end wall **654** of damper element **580** during operation and use of the gas damper assembly. A bumper or other cushioning element can, optionally, be disposed within either or both of chamber portions **658A** and/or **658B** such as may be useful to prevent or at least minimize the possibility of direct physical contact between damper piston **610** of damper element **578** and end wall **654** and/or end wall portion **662** of housing wall **656.** As shown in FIGS. 9 and 10, a bumper **670** is disposed within chamber portion **658B** and is supported along and secured to end wall **654** of damper element **580.** It will be appreciated, however, that any other suitable arrangement could alternately be used. For example, the bumper could alternately be secured on along piston base wall **608** of damper element **578.**

End wall **654** can also include a piston stop **672** that projects axially outwardly from along end wall **654** toward end **652** of damper element **580.** Piston stop **672** is at least partially defined by an outer side wall **674** and an end wall **676.** Outer side wall **674** can be of any suitable shape and/or configuration, such as cylindrical, for example. And, outer side wall **674** can be of any suitable cross-sectional size or dimension, such as is represented in FIG. 10 by reference dimension **D8.** Outer side wall **674** can extend outwardly in a direction toward end **652** by a predetermined distance, such as is represented in FIG. 10 by reference dimension **D9.** In a preferred arrangement, piston stop **674** is of suitable size, such as is represented by dimension **D8,** and suitable length, such as is represented by dimension **D9,** to fit into and out of piston passage **614** and thereby extend through piston base wall **608.** In such case, end wall **596** of piston stop **592** and end wall **676** of piston stop **672** can abuttingly interengage one another and thereby transfer loads and/or forces from damper element **576** to end wall **654** of damper element **580** without transferring loads and/or forces directly through the interconnection between end wall **654** and housing wall **656.** Additionally, such a construction may be useful in avoiding the application of a load associated with the full displacement of the damper elements to bumper **670.** Though shown as being integrally formed with end wall **654,** piston stop **672** could be separately provided and secured on or along the end wall using a suitable securement arrangement, such as a threaded fastener connection, a snap-fit connection or a press-fit connection, for example.

Additionally, end wall **654** of damper element **580** can be operatively connected on or along the second end member (e.g., piston **508**) in any suitable manner, such as through the use of a high-articulation misalignment mount **678,** for example. It will be appreciated that the construction, operation and interconnection of high-articulation misalignment mount **678** between damper element **580** and piston **508** can be substantially similar to the function, operation and interconnection of high-articulation misalignment mount **352** between damper element **280** and piston **208,** such as has been described in detail above in connection with FIGS. 3-7. For purposes of brevity and ease of reading, a full detailed description of misalignment mount **678** and the components thereof is not repeated here. However, it is to be distinctly understood that the foregoing description of misalignment mount **352** as well as the operation and interconnection thereof between damper element **280** and piston **208** is equally applicable to misalignment mount **678** between damper element **580** and piston **508.**

High-articulation misalignment mount **678** is shown in FIGS. 9 and 10 as including a mount socket **680** that is operatively connected to base member **532** by way of an opening (not numbered) extending therethrough and at least partially defined by an opening wall **682.** The mount socket can be secured along base member **532** in any suitable manner, such as by using a flowed-material joint **684,** for example, such that a substantially fluid-tight seal is formed therebetween.

A mounting member **686** is received in and supported on mount socket **680.** One or more sealing elements, such as sealing elements **688,** for example, can be disposed between the mount socket and the mounting member such that a substantially fluid-tight seal is formed therebetween. Mounting member **686** differs from mounting member **376** described above in that mounting member **686** includes two mounting studs **690** that projects axially-outwardly beyond outside surface **566.** Mounting studs **690** include a plurality of threads suitable for receiving a corresponding securement device, such as threaded nuts **692,** for example. As shown in FIG. 9, mounting studs **690** are operatively connected along lower structural component **LSC** using the threaded nuts. The use of two mounting studs that are laterally spaced from one another, such as mounting studs **690,** for example, can provide self-alignment and anti-rotation features that may not be available where a single mounting stud is used. Additionally, the use of two mounting studs can permit the use of smaller mounting holes, which may provide for improved structural integrity of the associated mounting component.

High-articulation misalignment mount **678** can also include a joint end **694** that is operatively connected to mounting member **686** and is capable of undergoing angular displacement relative thereto. Joint end **694** can include a mounting stud **696** that is adapted for securement on or along end wall **654,** such as by way of a threaded connection, for example. Mounting member **686** includes a spherical joint surface that is complimentary to a corresponding spherical joint surface on joint end **694** such that the joint end can undergo angular deflection about centerpoint or pivot **CP1** (FIG. 9), such as has been described above.

As discussed above, sealing elements can be respectively disposed between side wall **600** and passage wall portion **664** of housing wall **656** and/or between outer piston wall **630** and side wall portion **660** of housing wall **656,** such that a substantially fluid-tight seals can be formed therebetween. If such sealing elements are provided, it may be desirable, in some cases, to permit fluid transfer into, out of and/or between chamber portions **658A** and **658B** depending upon the desired performance characteristics of gas damper assembly **504.**

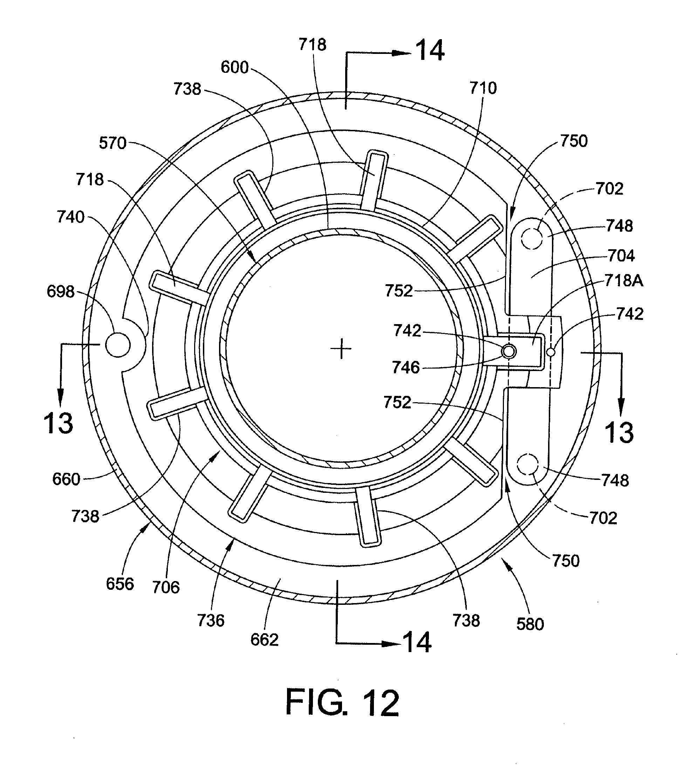

For example, the arrangement shown in FIGS. 9-11 includes a substantially fluid-tight seal formed between chamber portions **658A** and **658B** across damper piston **610.** In some cases, damper piston **610** may include a passage or port (not shown) extending through the piston wall that would permit fluid communication between chamber portions **658A** and **658B** through or otherwise across the damper piston. In the alternative, housing wall **656** and/or end wall **654** can include one or more passages or ports extending therethrough that will permit pressurized gas transfer into and out of chamber portion **658A** and/or **658B.** For example, end wall portion **662** of housing wall **656** can include one or more passage or ports **698** (FIGS. 10 and 12) extending therethrough that permit pressurized gas transfer into and out of chamber portion **658A** of damping chamber **658.** Additionally, end wall **654** can include one or more passages or ports **700** (FIG. 9) extending therethrough that permit pressurized gas transfer into and out of chamber portion **658B** of damping chamber **658.**

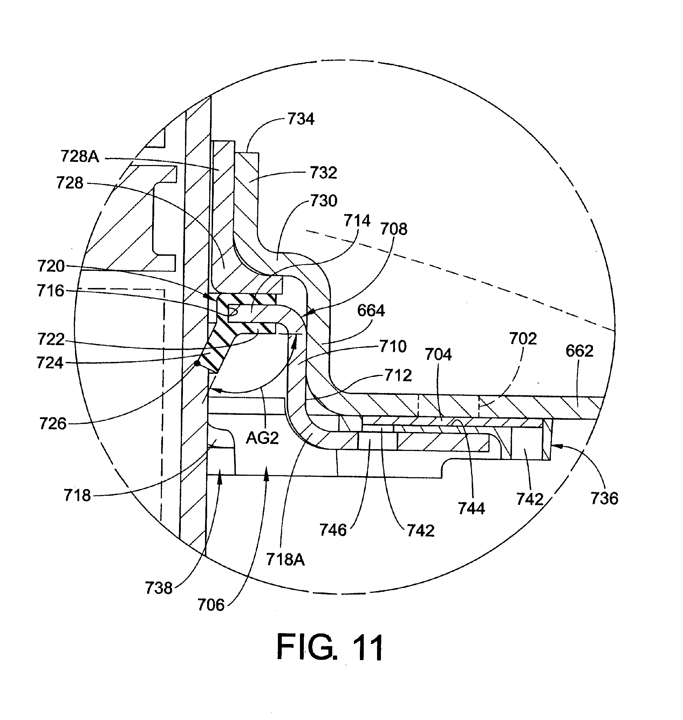

Furthermore, one or more of the passages or ports provided on or along the walls or wall portions (e.g., end wall **654,** and portions **660** and/or **662** of housing wall **656**) of damper element **580** can optionally include one or more flow control valves that restrict or otherwise control pressurized gas flow through corresponding passages or ports in one or more directions of flow. For example, end wall portion **662** includes one or more passages or ports **702** (FIGS. 10-12) that extend therethrough. A unidirectional or single direction flow control valve of a suitable type, kind and/or construction is disposed on or along the end wall portion and restricts pressurized gas flow to a single direction. In the exemplary arrangement shown in FIGS. 9-12, a one-way valve **704** (FIGS. 11 and 12) is fluidically associated with passages **702** and permit pressurized gas transfer into chamber portion **658A** through passages **702** while substantially inhibiting pressurized gas transfer out of chamber portion **658A** through passages **702.** As such, in the exemplary arrangement shown, pressurized gas transfer out of chamber portion **658A** occurs only through the remaining one or more of passages **698.**

Gas damper assembly **504** can also include an end assembly that is supported along end **652** of damper element **580** and is operatively disposed between damper elements **578** and **580.** The end assembly can include one or more bearing elements, such as for providing reduced-friction or wear resistance between the damper elements, for example. The end assembly can also include one or more sealing elements, such as for reducing communication or transfer of fluid (e.g., pressurized gas) between the damper elements. The end assembly can, optionally, further include one or more bumper elements, such as may be used to inhibit or minimize contact between two or more components of the damper elements. The end assembly can, optionally, also include one or more retaining elements, such as may be suitable for supporting or otherwise retaining one or more bearing elements, one or more sealing element, one or more bumper elements and/or other components on or along the end of the damper element.

In the exemplary arrangement shown in FIGS. 9-14, end assembly **706** is shown as including a seal case **708** that is dimensioned for securement on or along housing wall **656** of damper element **580.** As shown in FIGS. 11-14, seal case **708** can include a side wall **710** that extends in a generally axial direction and has an outside surface **712.** A seal support wall **714** extends radially-inwardly from along side wall **710** and terminates at an inner end wall **716** (FIG. 11) that is spaced radially-outwardly from side wall **600** of damper element **578.** A plurality of tabs **718** are spaced circumferentially along side wall **710.** The tabs extend axially-outwardly from along the sidewall in a direction opposite seal support wall **714** and project radially-outwardly beyond side wall **710.** In a preferred arrangement, side wall **710** is dimensioned to be pressed into the passage (not numbered) formed by passage wall portion **664** such that an interference fit is formed therebetween, such as may be used to retain the seal case and any associated components or element in position on or along end **652** of damper element **580.** It will be appreciated, however, that other arrangements could alternately be used. For example, one or more securement elements (e.g., threaded fasteners or snap-fit features) and/or a flowed-material joint could be used to secured or otherwise at least partially retain the seal case in position on or along the end of the damper element.

End assembly **706** is also shown as including a sealing element **720** that is secured along seal support wall **714** of seal case **708.** Sealing element **720** includes a base portion **722** that is supported along opposing surfaces of seal support wall **714** such that inner end wall **716** is at least partially encapsulated by the base portion. Sealing element **720** also includes a sealing lip **724** that projects radially-inwardly from along base portion **722** and is dimensioned to abuttingly engage side wall **600** of damper element **578.** Sealing lip **724** can project from base portion **722** at a non-zero angle, such as an angle within a range of from approximately 95 degrees to approximately 175 degrees, as is represented in FIG. 11 by dimension **AG2,** for example. The sealing lip can terminate at a radially-inward edge **726** that can form a contact area for abuttingly engaging the component wall associated therewith (e.g., side wall **600**). Sealing element can be formed in any suitable manner and from any suitable material or combination of materials. In a preferred arrangement, sealing element **720** can be formed from an elastomeric polymer (e.g., rubber, polyurethane) that is over-molded along seal support wall **714.** It will be appreciated, however, that other methods of manufacture could alternately be used. For example, the sealing element could be separately provided and installed on or along the seal support wall prior to assembly with the housing wall.

End assembly **706** can also, optionally, include one or more bearing elements. In the exemplary arrangement shown in FIGS. 9-11, a bushing **728** is disposed between damper elements **578** and **580,** such as may be useful for reducing frictional forces and/or providing improved wear during relative movement between the components. It will be appreciated that bushing **728** can be secured on or along damper element **580** in any suitable manner. For example, the bushing could be assembled together with the seal case such that the bushing and seal case are together installed on or along the housing wall of the damper element. As another example, as shown in FIG. 11, housing wall **656** can include retaining wall portions **730** and **732.** Retaining wall portion **730** is shown as extending radially-inwardly from along passage wall portion **664.** Retaining wall portion **732** extends axially-outwardly from portion **730** in a direction opposite passage wall portion **664** and terminates at a distal edge **734.** At least a portion of bushing **728** is shown as being captured between seal case **708** and retaining wall portion **730,** which maintains bushing **728** in a substantially-fixed axial position relative thereto. Retaining wall portion **732** is spaced radially-outwardly from side wall **600** of damper element **578,** and bushing **728** can, optionally, include a wall portion **728A** that extends axially toward distal edge **734.**

End assembly **706** can also, optionally, include one or more bumper or cushioning elements such as may be used to inhibit or minimize contact between two or more components of damper elements **578** and **580.** As discussed above, damper piston **610** of damper element **578** moves toward and away from end wall portion **662** of damper element **580** during operation and use of the gas damper assembly. In the exemplary arrangement shown in FIGS. 9-14, a bumper **736** can, optionally, be disposed within chamber portion **658A** such as may be useful to prevent or at least minimize the possibility of direct physical contact between damper piston **610** of damper element **578** and end wall portion **662** of housing wall **656.** Bumper **736** is supported along end wall portion **662** and in abutting engagement therewith by tabs **718** of seal case **708.** Bumper **736** can optionally include one or more slots or notches **738** formed thereinto that are dimensioned to at least partially receive tabs **718** and thereby minimize contact between the tabs and damper piston **610** of damper element **578.** Additionally, other alignment and/or clearance features, such as a radially-inwardly extending notch **740** adjacent passage **698** and/or alignment holes **742,** for example, can optionally be included. It will be appreciated, however, that other suitable arrangement could alternately be used. For example, the bumper could alternately be secured on along piston base wall **608** of damper element **578.**

The one or more flow control valves, if provided, can be operatively associated with the corresponding passages or ports in any suitable manner. As one example, valve **704,** if included, can be secured on or along end wall portion **662** within chamber portion **658A.** In the exemplary arrangement shown, valve **704** is at least partially received within a groove (not numbered) in bumper **736** that is at least partially formed by a groove wall **744.** Groove wall **744** and valve **704** are urged toward and into abutting engagement with end wall portion **662** by a tab **718A** that includes an alignment hole **746** in approximate alignment with one of alignment holes **742.** Valve **704** includes a central portion (not numbered) and at least one distal end **748** disposed outwardly therefrom in transverse relation to axis **AX.** In the exemplary arrangement shown in FIG. 12, valve **704** includes two, opposing distal ends that each extend across one of passages **702** to permit fluid transfer through the passages in at least one direction. To permit distal ends **748** deflect in response to a predetermined differential pressure level between spring chamber **512** and chamber portion **658A,** notches **750** formed at least in part by notch walls **752** can be provided along bumper **736.** It will be appreciated, however, that other arrangements could alternately be used.

Gas spring and gas damper assembly **500** can optionally include any number or one or more additional element, features and/or components. For example, a distance sensing device can be operatively connected on or along one of the components of the gas spring assembly or the gas damper assembly. As shown in FIGS. 9 and 10, for example, a height sensor **754** can be operatively secured on or along end wall portion **662** of housing wall **656** and can transmit suitable electromagnetic or ultrasonic waves **WVS** in an approximately longitudinal direction toward bead plate **506.** It will be appreciated, however, that other arrangements could alternately be used.

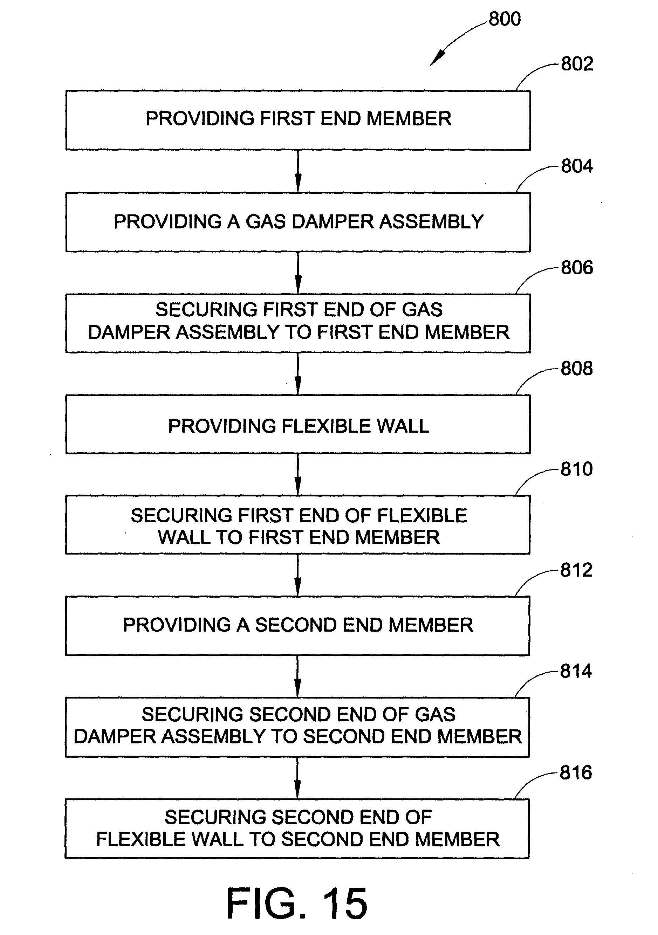

One example of a method of assembling a gas spring and gas damper assembly in accordance with the subject matter of the present disclosure, such as gas spring and gas damper assemblies **200** and/or **500,** for example, is illustrated in FIG. 15 as method **800.** The method can include providing a first end member of the gas spring assembly (e.g., bead plate **206** of gas spring assembly **202,** or bead plate **506** of assembly **502**), as is represented in FIG. 15 by item number **802.** Method **800** can also include providing a gas damper assembly (e.g., gas damper assembly **204** and/or **504**), as is represented in FIG. 15 by item number **804.** The method can further include securing a first end (e.g., end **272** or **572**) of the gas damper assembly on or along the first end member, as is represented by item number **806.** Method **800** can further include providing a flexible wall (e.g., flexible wall **210** or **510**), as is represented by item number **808,** and securing a first end (e.g., end **214** or **514**) of the flexible wall on or along the first end member, as is represented in FIG. 15 by item **810.** Method **800** can also include providing a second end member (e.g., piston **208** or **508**), as is represented by item number **812,** and securing a second end (e.g., end **274** or **574**) of the gas damper assembly on or along the second end member, as is represented in FIG. 15 by item number **814.** Method **800** can further include securing a second end (e.g., end **216** or **516**) of the flexible wall on or along the second end member, as is represented in FIG. 15 by item number **816.**

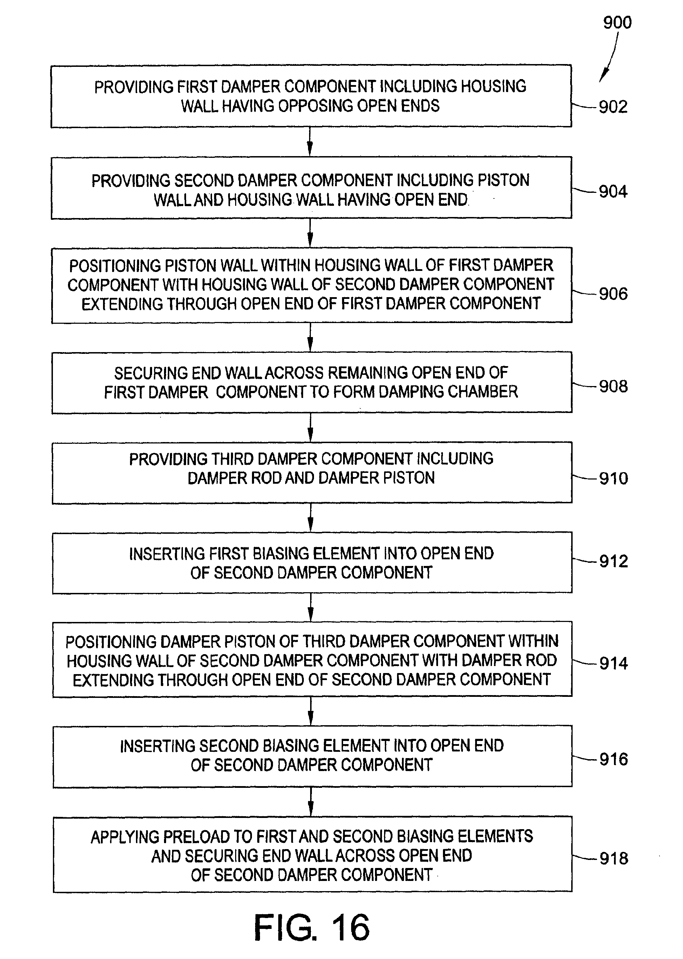

One example of a method of assembling a gas damper assembly in accordance with the subject matter of the present disclosure, such as gas damper assembly **204** and/or **504,** for example, is illustrated in FIG. 16 as method **900.** The method can include providing a first damper component including a housing wall (e.g., housing wall **326** or **656**) having opposing open ends (e.g., the damper passage at least partially defined by passage wall **334** and the open end formed by side wall portion **330** along end **322**), as is represented in FIG. 16 by item number **902.** Method **900** also includes providing a second damper component including a housing wall (e.g., side wall **294** or **600**) having an open end (e.g., the open end formed by side wall **294** along end **296**) and a piston wall (e.g., piston wall **302** or **608**), as is represented by item number **904.** Method **900** can further include positioning the piston wall within the housing wall (e.g., housing wall **326** or **656**) of the first damper component with the housing wall (e.g., side wall **294** or **600**) of the second damper component extending through an open end (e.g., the damper passage at least partially defined by passage wall **334**) of the first damper component, as is represented in FIG. 16 by item number **906.** Method **900** can also include securing an end wall (e.g., end wall **324** or **654**) across the remaining open end (e.g., the open end formed by side wall portion **330** along end **322**) to form a damping chamber (e.g., damping chamber **328** or **658**), as is represented by item number **908.**

Method **900** can also include providing a third damper component including a damper rod (e.g., damper rod **282** or **582**) and a damper piston (e.g., damper piston **288** or **588**)**,** as is represented in FIG. 16 by item number **910.** Method **900** can further include providing a first biasing element (e.g., biasing element **318** or **648**) and inserting the first biasing element into a damping chamber (e.g., damping chamber **300** or **606**) of the second damper component, as is represented by item number **912.** Method **900** can also include positioning the damper piston (e.g., damper piston **288** or **588**) within the damping chamber (e.g., damping chamber **300** or **606**) defined by the housing wall (e.g., side wall **294** or **600**) with the damping rod (e.g., damping rod **282** or **582**) projecting outwardly from the open end (e.g., the open end formed by side wall **294** along end **296**) of the housing wall, as is represented by item number **914.** Method **900** can further include providing a second biasing element (e.g., biasing element **316** or **646**) and inserting the second biasing element into the damping chamber of the second damper component, as is represented in FIG. 16 by item number **916.** Method **900** can also include applying a preload to the first and/or second biasing elements (e.g., biasing elements **318** and **316,** and/or **648** and **646**) and securing an end wall (e.g., end wall **306** or end cap **618**) across the open end of the housing wall of the second damper component, as is represented in FIG. 16 by item number **918.**

As used herein with reference to certain features, elements, components and/or structures, numerical ordinals (e.g., first, second, third, fourth, etc.) may be used to denote different singles of a plurality or otherwise identify certain features, elements, components and/or structures, and do not imply any order or sequence unless specifically defined by the claim language. Additionally, the terms "transverse," and the like, are to be broadly interpreted. As such, the terms "transverse," and the like, can include a wide range of relative angular orientations that include, but are not limited to, an approximately perpendicular angular orientation.

Furthermore, the phrase "flowed-material joint" and the like are to be interpreted to include any joint or connection in which a liquid or otherwise flowable material (e.g., a melted metal or combination of melted metals) is deposited or otherwise presented between adjacent component parts and operative to form a fixed and substantially fluid-tight connection therebetween. Examples of processes that can be used to form such a flowed-material joint include, without limitation, welding processes, brazing processes and soldering processes. In such cases, one or more metal materials and/or alloys can be used to form such a flowed-material joint, in addition to any material from the component parts themselves. Another example of a process that can be used to form a flowed-material joint includes applying, depositing or otherwise presenting an adhesive between adjacent component parts that is operative to form a fixed and substantially fluid-tight connection therebetween. In such case, it will be appreciated that any suitable adhesive material or combination of materials can be used, such as one-part and/or two-part epoxies, for example.

Further still, terms such as "gas," "pneumatic" and "fluid" as well as variants thereof, are used herein to broadly refer to and include any gaseous or vaporous fluid. Most commonly, air is used as the working medium of gas spring devices, such as those described herein, as well as suspension systems and other components thereof. However, it will be understood that any suitable gaseous fluid could alternately be used.

It will be recognized that numerous different features and/or components are presented in the embodiments shown and described herein, and that no one embodiment is specifically shown and described as including all such features and components. However, it is to be understood that the subject matter of the present disclosure is intended to encompass any and all combinations of the different features and components that are shown and described herein, and, without limitation, that any suitable arrangement of features and components, in any combination, can be used. Thus it is to be distinctly understood claims directed to any such combination of features and/or components, whether or not specifically embodied herein and whether or not initially presented in herein, are intended to find support in the present disclosure.

Thus, while the subject matter of the present disclosure has been described with reference to the foregoing embodiments and considerable emphasis has been placed herein on the structures and structural interrelationships between the component parts of the embodiments disclosed, it will be appreciated that other embodiments can be made and that many changes can be made in the embodiments illustrated and described without departing from the principles hereof. Obviously, modifications and alterations will occur to others upon reading and understanding the preceding detailed description. Accordingly, it is to be distinctly understood that the foregoing descriptive matter is to be interpreted merely as illustrative of the subject matter of the present disclosure and not as a limitation. As such, it is intended that the subject matter of the present disclosure be construed as including all such modifications and alterations insofar as they come within the scope of the appended claims and any equivalents thereof.

## Claims

1. A gas spring and gas damper assembly (110; 200; 500) comprising:
a gas spring (124; 202; 502) having a longitudinal axis and including:
a first end member (208; 508);
a second end member (206; 506) spaced longitudinally from said first end member (208; 508); and
a flexible wall (210; 510) extending circumferentially about said longitudinal axis and being operatively connected between said first and second end members (208; 508; 206; 506) such that a spring chamber (212; 512) is at least partially defined therebetween; and
a gas damper assembly (126; 204; 504) disposed within said spring chamber (212; 512) and operatively connected between said first and second end member (208; 508; 206; 506), said gas damper assembly (126; 204; 504) including:
a first damper element (280; 580) operatively connected to said first end member (208; 508) and including a first side wall (326; 656) at least partially defining a first damping chamber (328; 658);
a second damper element (278; 578) extending longitudinally between a first end (296; 602) and a second end (298; 604) opposite said first end, said second damper element including an end wall (306; 608) and a second side wall (294; 600) at least partially defining a second damping chamber (300; 606), said end wall disposed transverse to said second side wall and at least partially forming a second element piston (304; 610), said second damper element being oriented such that said second element piston and at least a portion of said second side wall are disposed within said first damping chamber (328; 658), said second damper element being slidably supported within said first damping chamber such that said end-wall is displaceable relative to said first side wall (326; 656) of said first damper element (280; 580); and
a third damper element (276; 576) operatively connected to said second end member (206; 506) and including a damper rod (282; 582) and a third element piston (288; 588) disposed along said damper rod in spaced relation to said second end member, said third damper element being oriented such that said third element piston and at least a portion of said damper rod are disposed within said second damping chamber (300; 606), said third damper element being displaceable relative to said second side wall (294; 600) of said second damper element (278; 578),
**characterized in that**
said gas damper assembly (126; 204; 504) further includes:
a first biasing element (316; 646) disposed within said second damping chamber (300; 606) between said first end (296; 602) of said second damper element (278; 578) and said third element piston (288; 588), said first biasing element operative to urge said first end of said second damper element in a direction away from said third element piston; and
a second biasing element (318; 648) disposed within said second damping chamber (300; 606) between said second end (298; 604) of said second damper element (278; 578) and said third element piston (288; 588), said second biasing element operative to urge said second end of said second damper element in a direction away from said third element piston.

2. A gas spring and gas damper assembly (110; 200; 500) according to claim 1, wherein said first and second biasing elements (316; 646; 318; 648) are compressive spring elements.

3. A gas spring and gas damper assembly (110; 200; 500) according to claim 2, wherein said compressive spring elements are one of elastomeric polymer spring elements and metal coil spring elements.

4. A gas spring and gas damper assembly (110; 200; 500) according to claim 1, wherein said damper rod (282; 582) and said third element piston (288; 588) are formed from a unitary mass of material such that a fillet having non-zero radius is formed between said damper rod and said third element piston.

5. A gas spring and gas damper assembly (110; 200; 500) according to any one of claims 1-4, wherein said end wall (306; 608) of said second damper element (278; 578) includes an opening extending therethrough such that a first portion of said first damping chamber (328; 658) and a first portion of said second damping chamber (300; 606) are in fluid communication with one another.

6. A gas spring and gas damper assembly (110; 200; 500) according to claim 5, wherein said first damper element (280; 580) includes an end wall (324; 654) disposed transverse to said first side wall (326; 656), and one of said third damper element (276; 576) and said end wall of said first damper element includes a projection dimensioned to extend through said opening in said end wall (306; 608) of said second damper element (278; 578) and abuttingly engage the other of said third damper element and said end wall of said first damper element.

7. A gas spring and gas damper assembly (110; 200; 500) according to any one of claims 1-6, wherein said second damper element (278; 578) includes a sealing element (338, 340) compressively disposed between said second element piston (304; 610) and said first side wall (326; 656) of said first damper element (280; 580) such that a substantially fluid-tight seal is formed therebetween.

8. A gas spring and gas damper assembly (110; 200; 500) according to claim 7, wherein said first damper element (280; 580) includes first and second end walls disposed transverse to said first side wall (326; 656) and disposed in axially-spaced relation to one another, each of said first and second end walls including at least one passage (344, 344A; 698, 700, 702) extending therethrough such that a portion of said first damping chamber (328; 658) on each side of said second element piston (304; 610) is in fluid communication with said spring chamber (212; 512).

9. A gas spring and gas damper assembly (110; 200; 500) according to claim 8, wherein said second end wall includes a first passage and a second passage with said first passage including a one-way flow control device (348; 704) operatively associated therewith, such that upon movement of said first and second end members (208; 508; 206; 506) toward one another pressurized gas within said spring chamber (212; 512) can flow through said first and second passages into said first damping chamber (328; 658), and upon movement of said first and second end members away from one another pressurized gas within said first damping chamber can flow through said second passage with said first passage being fluidically isolated from said first damping chamber by said one-way flow control device.

10. A gas spring and gas damper assembly (110; 200; 500) according to claim 8, wherein said gas damper assembly (126; 204; 504) includes a bumper (342; 670) supported within said first damping chamber (328; 658) along one of said first and second end walls.

11. A gas spring and gas damper assembly (110; 200; 500) according to claim 10, wherein said bumper (342; 670) is dimensioned to extend across at least a portion of a corresponding one of said first and second passages upon at least partially deflection of said bumper by said second element piston (304; 610).

12. A method of assembling a gas spring and gas damper assembly (110; 200; 500), said method comprising:
providing a first damper element (280; 580) including a first side wall (326; 656) at least partially defining a first damping chamber (328; 658);
providing a second damper element (278; 578) extending longitudinally between a first end (296; 602) and a second end (298; 604) opposite said first end, said second damper element including an end wall (306; 608) and a second side wall (294; 600) at least partially defining a second damping chamber (300; 606), said end wall disposed transverse to said second side wall and at least partially forming a second element piston (304; 610);
positioning said second element piston (304; 610) and at least a portion of said second side wall (294; 600) within said first damping chamber (328; 658) such that said second damper element (278; 578) is slidably supported within said first damping chamber (328; 658) and said second element piston is displaceable relative to said first side wall (326; 656) of said first damper element (280; 580);
providing a third damper element (276; 576) including a damper rod (282; 582) and a third element piston (288; 588) disposed along said damper rod;
positioning said third damper element (276; 576) such that said third element piston (288; 588) and at least a portion of said damper rod (282; 582) are disposed within said second damping chamber (300; 606);
providing first and second biasing elements (316, 318; 646, 648);
positioning said first biasing element (316; 646) within said second damping chamber (300; 606) between said first end (296; 602) of said second damper element (278; 578) and said third element piston (288; 588) such that said first biasing element is operative to urge said first end of said second damper element in a direction away from said third element piston;
positioning said second biasing element (318; 648) within said second damping chamber (300; 606) between said second end (298; 604) of said second damper element (278; 578) and said third element piston (288; 588) such that said second biasing element is operative to urge said second end of said second damper element in a direction away from said third element piston;
providing a first end member (208; 508) and securing one of said first and third damper elements (280, 276; 580, 576) to said first end member;
providing a second end member (206; 506) and securing the other of said first and third damper elements (280, 276; 580, 576) to said second end member; and
providing a flexible wall (210; 510) and securing said flexible wall between said first and second end members (208, 206; 508, 506) such that a spring chamber (212; 512) is at least partially formed by said flexible wall between said first and second end member, said spring chamber containing at least said first, second and third damper elements (280, 278, 276; 580, 578, 576).

13. A method according to claim 12 further comprising:
securing said first and second biasing elements (316, 318; 646, 648) within said second damping chamber (300; 606) such that said first and second biasing elements have a compressive preload.

14. A method according to either one of claims 12 and 13 further comprises:
providing a sealing element (338, 340); and
positioning said sealing element (338, 340) between said second element piston (304; 610) and said first side wall (326; 656) of said first damper element (280; 580) such that a substantially fluid-tight seal is formed therebetween.

15. A method according to claim 14, wherein providing a first damper element includes providing a first damper element (280; 580) that includes first and second end walls disposed transverse to said first side wall (326; 656) and in axially-spaced relation to one another with each of said first and second end walls including at least one passage (344, 344A; 698, 700, 702) extending therethrough such that a portion of said first damping chamber (328; 658) on each side of said second element piston (304; 610) is in fluid communication with said spring chamber (212; 512).

## Patentansprüche

1. Gasfeder- und Gasdruckdämpferbaugruppe (110; 200; 500), umfassend:
eine Gasfeder (124; 202; 502), die eine Längsachse aufweist und Folgendes umfasst:
ein erstes Endbauelement (208; 508);
ein zweites Endbauelement (206; 506), das in Längsrichtung von dem ersten Endbauelement (208; 508) beabstandet ist; und
eine biegsame Wand (210; 510), die sich umfangsmäßig um die Längsachse herum erstreckt und wirkungsmäßig zwischen dem ersten und dem zweiten Endbauelement (208; 508; 206; 506) derart angeschlossen ist, dass eine Federkammer (212; 512) mindestens teilweise dazwischen definiert ist; und
eine Gasdruckdämpferbaugruppe (126; 204; 504), die innerhalb der Federkammer (212; 512) angeordnet ist und wirkungsmäßig zwischen dem ersten und dem zweiten Endbauelement (208; 508; 206; 506) angeschlossen ist, wobei die Gasdruckdämpferbaugruppe (126; 204; 504) Folgendes umfasst:
ein erstes Dämpferelement (280; 580), das wirkungsmäßig mit dem ersten Endbauelement (208; 508) verbunden ist und eine erste Seitenwand (326; 656) umfasst, die mindestens teilweise eine erste Dämpfungskammer (328; 658) definiert;
ein zweites Dämpferelement (278; 578), das sich in Längsrichtung zwischen einem ersten Ende (296; 602) und einem zweiten Ende (298; 604) gegenüber des ersten Endes erstreckt, wobei das zweite Dämpferelement eine Endwand (306; 608) und eine zweite Seitenwand (294; 600) umfasst, die mindestens teilweise eine zweite Dämpfungskammer (300; 606) definieren, wobei die Endwand quer zu der zweiten Seitenwand angeordnet ist und mindestens teilweise einen zweiten Elementkolben (304; 610) bildet, wobei das zweite Dämpferelement derart orientiert ist, dass der zweite Elementkolben und mindestens ein Teil der zweiten Seitenwand innerhalb der ersten Dämpfungskammer (328; 658) angeordnet sind, wobei das zweite Dämpferelement innerhalb der ersten Dämpfungskammer derart gleitbar getragen wird, dass die Endwand im Verhältnis zu der ersten Seitenwand (326; 656) des ersten Dämpferelements (280; 580) verschiebbar ist; und
ein drittes Dämpferelement (276; 576), das wirkungsmäßig mit dem zweiten Endbauelement (206; 506) verbunden ist und eine Dämpferstange (282; 582) und einen dritten Elementkolben (288; 588), der entlang der Dämpferstange in beabstandeter Beziehung zu dem zweiten Endbauelement angeordnet ist, umfasst, wobei das dritte Dämpferelement derart orientiert ist, dass der dritte Elementkolben und mindestens ein Teil der Dämpferstange innerhalb der zweiten Dämpfungskammer (300; 606) angeordnet sind, wobei das dritte Dämpferelement mit Bezug auf die zweite Seitenwand (294; 600) des zweiten Dämpferelements (278; 578) verschiebbar ist,
**dadurch gekennzeichnet, dass**
die Gasdruckdämpferbaugruppe (126; 204; 504) ferner Folgendes umfasst:
ein erstes Vorspannelement (316; 646), das innerhalb der zweiten Dämpfungskammer (300; 606) zwischen dem ersten Ende (296; 602) des zweiten Dämpferelements (278; 578) und dem dritten Elementkolben (288; 588) angeordnet ist, wobei das erste Vorspannelement betriebsfähig ist, um das erste Ende des zweiten Dämpferelements in eine sich von dem dritten Elementkolben entfernende Richtung zu drängen; und
ein zweites Vorspannelement (318; 648), das innerhalb der zweiten Dämpfungskammer (300; 606) zwischen dem zweiten Ende (298; 604) des zweiten Dämpferelements (278; 578) und dem dritten Elementkolben (288; 588) angeordnet ist, wobei das zweite Vorspannelement betriebsfähig ist, um das zweite Ende des zweiten Dämpferelements in eine sich von dem dritten Elementkolben entfernende Richtung zu drängen.

2. Gasfeder- und Gasdruckdämpferbaugruppe (110; 200; 500) nach Anspruch 1, wobei das erste und das zweite Vorspannelement (316; 646; 318; 648) Druckfederelemente sind.

3. Gasfeder- und Gasdruckdämpferbaugruppe (110; 200; 500) nach Anspruch 2, wobei die Druckfederelemente eines von elastomeren Polymerfederelementen und Metallschraubenfederelementen sind.

4. Gasfeder- und Gasdruckdämpferbaugruppe (110; 200; 500) nach Anspruch 1, wobei die Dämpferstange (282; 582) und der dritte Elementkolben (288; 588) aus einer einheitlichen Materialmasse gebildet sind, so dass sich eine Ausrundung mit einem Radius ungleich null zwischen der Dämpferstange und dem dritten Elementkolben bildet.

5. Gasfeder- und Gasdruckdämpferbaugruppe (110; 200; 500) nach einem der Ansprüche 1 bis 4, wobei die Endwand (306; 608) des zweiten Dämpferelements (278; 578) eine Öffnung umfasst, die sich derart durch dieses hindurch erstreckt, dass ein erster Teil der ersten Dämpfungskammer (328; 658) und ein erster Teil der zweiten Dämpfungskammer (300; 606) in Fluidverbindung miteinander stehen.

6. Gasfeder- und Gasdruckdämpferbaugruppe (110; 200; 500) nach Anspruch 5, wobei das erste Dämpferelement (280; 580) eine Endwand (324; 654) umfasst, die quer zu der ersten Seitenwand (326; 656) angeordnet ist, und eines von dem dritten Dämpferelement (276; 576) und der Endwand des ersten Dämpferelements einen Vorsprung umfasst, der dimensioniert ist, um sich durch die Öffnung in der Endwand (306; 608) des zweiten Dämpferelements (278; 578) hindurch zu erstrecken und an das andere von dem dritten Dämpferelement und der Endwand des ersten Dämpferelements anliegend anzugreifen.

7. Gasfeder- und Gasdruckdämpferbaugruppe (110; 200; 500) nach einem der Ansprüche 1 bis 6, wobei das zweite Dämpferelement (278; 578) ein Abdichtungselement (338, 340) umfasst, das zusammengedrückt zwischen dem zweiten Elementkolben (304; 610) und der ersten Seitenwand (326; 656) des ersten Dämpferelements (280; 580) derart angeordnet ist, dass sich dazwischen eine im Wesentlichen fluiddichte Abdichtung bildet.

8. Gasfeder- und Gasdruckdämpferbaugruppe (110; 200; 500) nach Anspruch 7, wobei das erste Dämpferelement (280; 580) erste und zweite Endwände umfasst, die quer zu der ersten Seitenwand (326; 656) angeordnet sind und in axial beabstandeter Beziehung zueinander angeordnet sind, wobei jede der ersten und zweiten Endwände mindestens einen Durchgang (344, 344A; 698, 700, 702) umfasst, der sich derart durch diese hindurch erstreckt, dass ein Teil der ersten Dämpfungskammer (328; 658) auf jeder Seite des zweiten Elementkolbens (304; 610) in Fluidverbindung mit der Federkammer (212; 512) steht.

9. Gasfeder- und Gasdruckdämpferbaugruppe (110; 200; 500) nach Anspruch 8, wobei die zweite Endwand einen ersten Durchgang und einen zweiten Durchgang umfasst, wobei der erste Durchgang eine Einweg-Strömungsregelungsvorrichtung (348; 704) umfasst, die damit wirkungsmäßig verknüpft ist, so dass bei einer Bewegung des ersten und des zweiten Endbauelements (208; 508; 206; 506) zueinander zu Druckgas innerhalb der Federkammer (212; 512) durch den ersten und den zweiten Durchgang in die erste Dämpfungskammer (328; 658) strömen kann, und bei einer Bewegung des ersten und des zweiten Endbauelements voneinander weg Druckgas innerhalb der ersten Dämpfungskammer durch den zweiten Durchgang hindurch strömen kann, wobei der erste Durchgang von der ersten Dämpfungskammer durch die Einweg-Strömungsregelungsvorrichtung fluidisch getrennt ist.

10. Gasfeder- und Gasdruckdämpferbaugruppe (110; 200; 500) nach Anspruch 8, wobei die Gasdruckdämpferbaugruppe (126; 204; 504) einen Puffer (342; 670) umfasst, der innerhalb der ersten Dämpfungskammer (328; 658) entlang einer der ersten und zweiten Endwände getragen wird.

11. Gasfeder- und Gasdruckdämpferbaugruppe (110; 200; 500) nach Anspruch 10, wobei der Puffer (342; 670) dimensioniert ist, um sich bei einer mindestens teilweisen Ablenkung des Puffers durch den zweiten Elementkolben (304; 610) mindestens über einen Teil eines entsprechenden von des ersten und des zweiten Durchgangs zu erstrecken.

12. Verfahren zum Zusammensetzen einer Gasfeder- und Gasdruckdämpferbaugruppe (110; 200; 500), wobei das Verfahren Folgendes umfasst:
Bereitstellen eines ersten Dämpferelements (280; 580), das eine erste Seitenwand (326; 656) umfasst, die mindestens teilweise eine erste Dämpfungskammer (328; 658) definiert;
Bereitstellen eines zweiten Dämpferelements (278; 578), das sich in Längsrichtung zwischen einem ersten Ende (296; 602) und einem zweiten Ende (298; 604) gegenüber des ersten Endes erstreckt, wobei das zweite Dämpferelement eine Endwand (306; 608) und eine zweite Seitenwand (294; 600) umfasst, die mindestens teilweise eine zweite Dämpfungskammer (300; 606) definieren, wobei die Endwand quer zu der zweiten Seitenwand angeordnet ist und mindestens teilweise einen zweiten Elementkolben (304; 610) bildet;
Positionieren des zweiten Elementkolbens (304; 610) und mindestens eines Teils der zweiten Seitenwand (294; 600) innerhalb der ersten Dämpfungskammer (328; 658), so dass das zweite Dämpferelement (278; 578) innerhalb der ersten Dämpfungskammer (328; 658) gleitbar getragen wird und der zweite Elementkolben mit Bezug auf die erste Seitenwand (326; 656) des ersten Dämpferelements (280; 580) verschiebbar ist;
Bereitstellen eines dritten Dämpferelements (276; 576), das eine Dämpferstange (282; 582) und einen dritten Elementkolben (288; 588) umfasst, der entlang der Dämpferstange angeordnet ist;
Positionieren des dritten Dämpferelements (276; 576), so dass der dritte Elementkolben (288; 588) und mindestens ein Teil der Dämpferstange (282; 582) innerhalb der zweiten Dämpfungskammer (300; 606) angeordnet sind;
Bereitstellen eines ersten und eines zweiten Vorspannelements (316, 318; 646, 648);
Positionieren des ersten Vorspannelements (316; 646) innerhalb der zweiten Dämpfungskammer (300; 606) zwischen dem ersten Ende (296; 602) des zweiten Dämpferelements (278; 578) und dem dritten Elementkolben (288; 588), so dass das erste Vorspannelement betriebsfähig ist, um das erste Ende des zweiten Dämpferelements in eine sich von dem dritten Elementkolben entfernende Richtung zu drängen;
Positionieren des zweiten Vorspannelements (318; 648) innerhalb der zweiten Dämpfungskammer (300; 606) zwischen dem zweiten Ende (298; 604) des zweiten Dämpferelements (278; 578) und dem dritten Elementkolben (288; 588), so dass das zweite Vorspannelement betriebsfähig ist, um das zweite Ende des zweiten Dämpferelements in eine sich von dem dritten Elementkolben entfernende Richtung zu drängen;
Bereitstellen eines ersten Endbauelements (208; 508) und Sichern von einem des ersten und des dritten Dämpferelements (280, 276; 580, 576) an dem ersten Endbauelement;
Bereitstellen eines zweiten Endbauelements (206; 506) und Sichern des anderen des ersten und des dritten Dämpferelements (280, 276; 580, 576) an dem zweiten Endbauelement; und
Bereitstellen einer biegsamen Wand (210; 510) und Sichern der biegsamen Wand zwischen dem ersten und dem zweiten Endbauelement (208, 206; 508, 506), so dass eine Federkammer (212; 512) mindestens teilweise durch die biegsame Wand zwischen dem ersten und dem zweiten Endbauelement gebildet wird, wobei die Federkammer mindestens das erste, das zweite und das dritte Dämpferelement (280, 278, 276; 580, 578, 576) enthält.

13. Verfahren nach Anspruch 12, ferner umfassend:
Sichern der ersten und des zweiten Vorspannelements (316, 318; 646, 648) innerhalb der zweiten Dämpfungskammer (300; 606), so dass das erste und das zweite Vorspannelement eine Druckvorspannung aufweist.

14. Verfahren nach einem der Ansprüche 12 und 13, ferner umfassend:
Bereitstellen eines Abdichtungselements (338, 340); und
Positionieren des Abdichtungselements (338, 340) zwischen dem zweiten Elementkolben (304; 610) und der ersten Seitenwand (326; 656) des ersten Dämpferelements (280; 580), so dass sich eine im Wesentlichen fluiddichte Abdichtung dazwischen bildet.

15. Verfahren nach Anspruch 14, wobei das Bereitstellen eines ersten Dämpferelements das Bereitstellen eines ersten Dämpferelements (280; 580) umfasst, das eine erste und eine zweite Endwand umfasst, die quer zu der ersten Seitenwand (326; 656) und in axial beabstandeter Beziehung zueinander angeordnet sind, wobei jede der ersten und der zweiten Endwand mindestens einen Durchgang (344, 344A; 698, 700, 702) umfasst, der sich derart durch diese hindurch erstreckt, dass ein Teil der ersten Dämpfungskammer (328; 658) auf jeder Seite des zweiten Elementkolbens (304; 610) in Fluidverbindung mit der Federkammer (212; 512) steht.

## Revendications

1. Ensemble ressort à gaz et amortisseur à gaz (110 ; 200 ; 500) comprenant :
un ressort à gaz (124 ; 202 ; 502) ayant un axe longitudinal et comprenant :
un premier élément d'extrémité (208 ; 508) ;
un second élément d'extrémité (206 ; 506) espacé longitudinalement dudit premier élément d'extrémité (208 ; 508) ; et
une paroi souple (210 ; 510) s'étendant de manière circonférentielle autour dudit axe longitudinal et qui est reliée de manière fonctionnelle entre lesdits premier et second éléments d'extrémité (208 ; 508 ; 206 ; 506) de telle sorte qu'une chambre de ressort (212 ; 512) est au moins partiellement définie entre ceux-ci ; et
un ensemble amortisseur à gaz (126 ; 204 ; 504) disposé à l'intérieur de ladite chambre de ressort (212 ; 512) et relié de manière fonctionnelle entre lesdits premier et second éléments d'extrémité (208 ; 508 ; 206 ; 506), ledit ensemble amortisseur à gaz (126 ; 204 ; 504) comprenant :
un premier élément amortisseur (280 ; 580) relié de manière fonctionnelle audit premier élément d'extrémité (208 ; 508) et comprenant une première paroi latérale (326 ; 656) définissant au moins partiellement une première chambre d'amortissement (328 ; 658) ;
un deuxième élément amortisseur (278 ; 578) s'étendant longitudinalement entre une première extrémité (296 ; 602) et une seconde extrémité (298 ; 604) opposée à ladite première extrémité, ledit deuxième élément amortisseur comprenant une paroi d'extrémité (306 ; 608) et une seconde paroi latérale (294 ; 600) définissant au moins partiellement une seconde chambre d'amortissement (300 ; 606), ladite paroi d'extrémité étant disposée transversale à ladite seconde paroi latérale et formant au moins partiellement un piston de deuxième élément (304 ; 610), ledit deuxième élément amortisseur étant orienté de telle sorte que ledit piston de deuxième élément et au moins une partie de ladite seconde paroi latérale sont disposés à l'intérieur de ladite première chambre d'amortissement (328 ; 658), ledit deuxième élément amortisseur étant porté coulissant à l'intérieur de ladite première chambre d'amortissement de telle sorte que ladite paroi d'extrémité est déplaçable par rapport à ladite première paroi latérale (326 ; 656) dudit premier élément amortisseur (280 ; 580) ; et
un troisième élément amortisseur (276 ; 576) relié de manière fonctionnelle audit second élément d'extrémité (206 ; 506) et comprenant une tige d'amortisseur (282 ; 582) et un piston de troisième élément (288 ; 588) disposé le long de ladite tige d'amortisseur en relation espacée par rapport audit second élément d'extrémité, ledit troisième élément amortisseur étant orienté de telle sorte que ledit piston de troisième élément et au moins une partie de ladite tige d'amortisseur sont disposés à l'intérieur de ladite seconde chambre d'amortissement (300 ; 606), ledit troisième élément amortisseur étant déplaçable par rapport à ladite seconde paroi latérale (294 ; 600) dudit deuxième élément amortisseur (278 ; 578),
**caractérisé en ce que**
ledit ensemble amortisseur à gaz (126 ; 204 ; 504) comprend en outre :
un premier élément de sollicitation (316 ; 646) disposé à l'intérieur de ladite seconde chambre d'amortissement (300 ; 606) entre ladite première extrémité (296 ; 602) dudit deuxième élément amortisseur (278 ; 578) et ledit piston de troisième élément (288 ; 588), ledit premier élément de sollicitation étant apte à pousser ladite première extrémité dudit deuxième élément amortisseur dans une direction à l'opposé dudit piston de troisième élément ; et
un second élément de sollicitation (318 ; 648) disposé à l'intérieur de ladite seconde chambre d'amortissement (300 ; 606) entre ladite seconde extrémité (298 ; 604) dudit deuxième élément amortisseur (278 ; 578) et ledit piston de troisième élément (288 ; 588), ledit second élément de sollicitation étant apte à pousser ladite seconde extrémité dudit deuxième élément amortisseur dans une direction à l'opposé dudit piston de troisième élément.

2. Ensemble ressort à gaz et amortisseur à gaz (110 ; 200 ; 500) selon la revendication 1, dans lequel lesdits premier et second éléments de sollicitation (316 ; 646 ; 318 ; 648) sont des éléments ressorts de compression.

3. Ensemble ressort à gaz et amortisseur à gaz (110 ; 200 ; 500) selon la revendication 2, dans lequel lesdits éléments ressorts de compression sont l'un parmi des éléments ressorts en polymère élastomères et des éléments ressorts hélicoïdaux métalliques.

4. Ensemble ressort à gaz et amortisseur à gaz (110 ; 200 ; 500) selon la revendication 1, dans lequel ladite tige d'amortisseur (282 ; 582) et ledit piston de troisième élément (288 ; 588) sont formés d'une masse monobloc de matériau de telle sorte qu'un congé ayant un rayon non nul est formé entre ladite tige d'amortisseur et ledit piston de troisième élément.

5. Ensemble ressort à gaz et amortisseur à gaz (110 ; 200 ; 500) selon l'une quelconque des revendications 1 à 4, dans lequel ladite paroi d'extrémité (306 ; 608) dudit deuxième élément amortisseur (278 ; 578) comprend une ouverture s'étendant à travers celle-ci de telle sorte qu'une première partie de ladite première chambre d'amortissement (328 ; 658) et une première partie de ladite seconde chambre d'amortissement (300 ; 606) sont en communication fluidique l'une avec l'autre.

6. Ensemble ressort à gaz et amortisseur à gaz (110 ; 200 ; 500) selon la revendication 5, dans lequel ledit premier élément amortisseur (280 ; 580) comprend une paroi d'extrémité (324 ; 654) disposée transversale à ladite première paroi latérale (326 ; 656), et l'un dudit troisième élément amortisseur (276 ; 576) et de ladite paroi d'extrémité dudit premier élément amortisseur comprend une saillie dimensionnée pour s'étendre à travers ladite ouverture dans ladite paroi d'extrémité (306 ; 608) dudit deuxième élément amortisseur (278 ; 578) et entrer en butée contre l'autre dudit troisième élément amortisseur et de ladite paroi d'extrémité dudit premier élément amortisseur.

7. Ensemble ressort à gaz et amortisseur à gaz (110 ; 200 ; 500) selon l'une quelconque des revendications 1 à 6, dans lequel ledit deuxième élément amortisseur (278 ; 578) comprend un élément d'étanchéité (338, 340) disposé de manière compressée entre ledit piston de deuxième élément (304 ; 610) et ladite première paroi d'extrémité (326 ; 656) dudit premier élément amortisseur (280 ; 580) de telle sorte qu'un joint sensiblement étanche aux fluides est formé entre ceux-ci.

8. Ensemble ressort à gaz et amortisseur à gaz (110 ; 200 ; 500) selon la revendication 7, dans lequel le premier élément amortisseur (280 ; 580) comprend des première et seconde parois d'extrémité disposées transversales à ladite première paroi latérale (326 ; 656) et disposées en relation axialement espacée l'une de l'autre, chacune desdites première et seconde parois d'extrémité comprenant au moins un passage (344, 344A ; 698, 700, 702) s'étendant à travers celle-ci de telle sorte qu'une partie de ladite première chambre d'amortissement (328 ; 658) sur chaque côté dudit piston de deuxième élément (304 ; 610) est en communication fluidique avec ladite chambre de ressort (212 ; 512).

9. Ensemble ressort à gaz et amortisseur à gaz (110 ; 200 ; 500) selon la revendication 8, dans lequel ladite seconde paroi d'extrémité comprend un premier passage et un second passage, ledit premier passage comprenant un dispositif unidirectionnel de commande de débit (348 ; 704) associé de manière fonctionnelle avec celui-ci, de telle sorte que lors d'un mouvement desdits premier et second éléments d'extrémité (208 ; 508 ; 206 ; 506) l'un vers l'autre, du gaz sous pression à l'intérieur ladite chambre de ressort (212 ; 512) peut s'écouler à travers lesdits premier et second passages jusqu'à ladite première chambre d'amortissement (328 ; 658), et lors d'un mouvement desdits premier et second éléments d'extrémité à l'opposé l'un de l'autre, du gaz sous pression à l'intérieur de ladite première chambre d'amortissement peut s'écouler à travers ledit second passage, avec ledit premier passage fluidiquement isolé de ladite première chambre d'amortissement par ledit dispositif unidirectionnel de commande de débit.

10. Ensemble ressort à gaz et amortisseur à gaz (110 ; 200 ; 500) selon la revendication 8, dans lequel ledit ensemble d'amortisseur à gaz (126 ; 204 ; 504) comprend une butée (342 ; 670) soutenue à l'intérieur de ladite première chambre d'amortissement (328 ; 658) le long de l'une desdites première et seconde parois d'extrémité.

11. Ensemble ressort à gaz et amortisseur à gaz (110 ; 200 ; 500) selon la revendication 10, dans lequel ladite butée (342 ; 670) est dimensionnée pour s'étendre à travers au moins une partie d'un passage correspondant desdits premier et second passages après un écrasement au moins partiel de ladite butée par ledit piston de deuxième élément (304 ; 610).

12. Procédé d'assemblage d'un ensemble ressort à gaz et amortisseur à gaz (110 ; 200 ; 500), ledit procédé comprenant :
se procurer un premier élément amortisseur (280 ; 580) comprenant une première paroi latérale (326 ; 656) définissant au moins partiellement une première chambre d'amortissement (328 ; 658) ;
se procurer un deuxième élément amortisseur (278 ; 578) s'étendant longitudinalement entre une première extrémité (296 ; 602) et une seconde extrémité (298 ; 604) opposée à ladite première extrémité, ledit deuxième élément amortisseur comprenant une paroi d'extrémité (306 ; 608) et une seconde paroi latérale (294 ; 600) définissant au moins partiellement une seconde chambre d'amortissement (300 ; 606), ladite paroi d'extrémité étant disposée transversale à ladite seconde paroi latérale et formant au moins partiellement un piston de deuxième élément (304 ; 610) ;
positionner ledit piston de deuxième élément (304 ; 610) et au moins une partie de ladite seconde paroi latérale (294 ; 600) à l'intérieur de ladite première chambre d'amortissement (328 ; 658) de telle sorte que ledit deuxième élément amortisseur (278 ; 578) est porté coulissant à l'intérieur de ladite première chambre d'amortissement (328 ; 658) et ledit piston de deuxième élément est déplaçable par rapport à ladite première paroi latérale (326 ; 656) dudit premier élément amortisseur (280 ; 580) ;
se procurer un troisième élément amortisseur (276 ; 576) comprenant une tige d'amortisseur (282 ; 582) et un piston de troisième élément (288 ; 588) disposé le long de ladite tige d'amortisseur ;
positionner ledit troisième élément amortisseur (276 ; 576) de telle sorte que ledit piston de troisième élément (288 ; 588) et au moins une partie de ladite tige d'amortisseur (282 ; 582) sont disposés à l'intérieur de ladite deuxième chambre d'amortissement (300 ; 606) ;
se procurer des premier et second éléments de sollicitation (316, 318 ; 646, 648) ;
positionner ledit premier élément de sollicitation (316 ; 646) à l'intérieur de ladite seconde chambre d'amortissement (300 ; 606) entre ladite première extrémité (296 ; 602) dudit deuxième élément amortisseur (278 ; 578) et ledit piston de troisième élément (288 ; 588) de telle sorte que ledit premier élément de sollicitation est apte à pousser ladite première extrémité dudit deuxième élément amortisseur dans une direction à l'opposé dudit piston de troisième élément ;
positionner ledit second élément de sollicitation (318 ; 648) à l'intérieur de ladite seconde chambre d'amortissement (300 ; 606) entre ladite seconde extrémité (298 ; 604) dudit deuxième élément amortisseur (278 ; 578) et ledit piston de troisième élément (288 ; 588) de telle sorte que ledit second élément de sollicitation est apte à pousser ladite seconde extrémité dudit deuxième élément amortisseur dans une direction à l'opposé dudit piston de troisième élément ;
se procurer un premier élément d'extrémité (208 ; 508) et fixer l'un desdits premier et troisième éléments amortisseurs (280, 276 ; 580, 576) audit premier élément d'extrémité ;
se procurer un second élément d'extrémité (206 ; 506) et fixer l'autre desdits premier et troisième éléments amortisseurs (280, 276 ; 580, 576) audit second élément d'extrémité ; et
se procurer une paroi souple (210 ; 510) et fixer ladite paroi souple entre lesdits premier et second éléments d'extrémité (208, 206 ; 508, 506) de telle sorte qu'une chambre de ressort (212 ; 512) est au moins partiellement formée par ladite paroi souple entre lesdits premier et second éléments d'extrémité, ladite chambre de ressort contenant au moins lesdits premier, deuxième et troisième éléments amortisseurs (280, 278, 276 ; 580, 578, 576).

13. Procédé selon la revendication 12 comprenant en outre :
fixer lesdits premier et second éléments de sollicitation (316, 318 ; 646, 648) à l'intérieur de ladite seconde chambre d'amortissement (300 ; 606) de telle sorte que lesdits premier et second éléments de sollicitation ont une précharge de compression.

14. Procédé selon l'une quelconque des revendications 12 et 13 comprenant en outre :
se procurer un élément d'étanchéité (338, 340) ; et
positionner ledit élément d'étanchéité (338, 340) entre ledit piston de deuxième élément (304 ; 610) et ladite première paroi latérale (326 ; 656) dudit premier élément amortisseur (280 ; 580) de telle sorte qu'un joint sensiblement étanche aux fluides est formé entre ceux-ci.

15. Procédé selon la revendication 14, dans lequel se procurer un premier élément amortisseur comprend se procurer un premier élément amortisseur (280 ; 580) qui comprend des première et seconde parois d'extrémité disposées transversales à ladite première paroi latérale (326 ; 656) et en relation axialement espacée l'une de l'autre, chacune des première et seconde parois d'extrémité comprenant au moins un passage (344, 344A ; 698, 700, 702) s'étendant à travers celle-ci de telle sorte qu'une partie de ladite première chambre d'amortissement (328 ; 658) sur chaque côté dudit piston de deuxième élément (304 ; 610) est en communication fluidique avec ladite chambre de ressort (212 ; 512).
